# EUROPEAN PATENT APPLICATION

(11) **EP 4 691 264 A1**
(43) Date of publication of application: **11.02.2026**
(21) Application number: 24778645.2
(22) Date of filing: 30.01.2024
(51) Int. Cl.: A23L 27/00, A23J 3/00, A23J 3/14, A23J 3/16, A23J 3/18, A23J 3/30, A23L 5/00, A23L 11/00, A23L 13/00, A23L 27/60, A23L 35/00

(54) **HEATED SEASONING COMPOSITION AND FLAVORING COMPOSITION**

(30) Priority: 29.03.2023 JP 2023053040; 29.03.2023 JP 2023053041; 22.08.2023 JP 2023134356
(71) Applicant: Kikkoman Corporation, Noda-shi, Chiba 278-8601 (JP)
(72) Inventor: ENDO, Yoshikazu, Noda-Shi, Chiba 278-8601 (JP); OHIRA, Takuya, Noda-Shi, Chiba 278-8601 (JP); KOMATSUZAKI, Airi, Noda-Shi, Chiba 278-8601 (JP); TATEMICHI, Yuki, Noda-shi, Chiba 278-8601 (JP); OHNO, Naoto, Noda-shi, Chiba 278-8601 (JP)
(74) Representative: Schulz Junghans Patentanwälte PartGmbB
(86) International application number: PCT/JP2024/002861
(87) International publication number: WO 2024/202499

(57) **Abstract**

The objective of the present invention is to provide a seasoning composition substitutable for beef extract and widely applicable to plant food products. The above objective can be solved by a heated seasoning composition, containing a plant protein degradation product, saccharide, vegetable extract and plant oil, wherein the heated seasoning composition has a pH value equal to or more than 4.50, the total amount of the plant protein degradation product, the saccharide and the vegetable extract is equal to or more than 60 wt% relative to the total amount of the heated seasoning composition; a method of producing a plant food product including cooking by using a heated seasoning composition and a plant derived ingredient to obtain the plant food product, wherein the heated seasoning composition contains a plant protein degradation product, saccharide, vegetable extract and plant oil, the heated seasoning composition has a pH value equal to or more than 4.50, the total amount of the plant protein degradation product, the saccharide and the vegetable extract is equal to or more than 60 wt% relative to the total amount of the heated seasoning composition; and the like.

## Description

### Technical Field

The present invention relates to a heated seasoning composition. In detail, the present invention relates to a heated seasoning composition suitable for a seasoning to taste a cuisine with a plant-derived ingredient. The present invention also relates to a flavor imparting composition. In detail, the present invention relates to a flavor imparting composition used to impart flavor to a plant food product obtained by using a plant-derived ingredient.

### Background Art

Meat and fish dishes are generally enjoyed as main dishes. However, in recent years, in addition to vegetarians, the population of vegans who do not eat any animal-derived ingredient at all, including meat and fish as well as dairy and egg, has been expanding. Vegans eat plant food products using a plant-derived ingredient and using no animal-derived ingredient.

Protein, polyunsaturated fatty acid and other nutrients contained in animal-derived ingredients impart deep flavor to a food product. In particular, meat has koku (richness) and distinctive flavor combined with unique fatty aroma in addition to texture. In contrast, many plant food products have less texture and poor flavor as compared with food products using animal-derived ingredients.

Meat extract, which is an extract of meat, is more often used as a food product using meat, rather than meat itself. Of meat extract, beef extract can impart richness and flavor unique to beef to a food product. Beef extract is a raw material obtained from a boiling broth produced as a byproduct in producing processed meat products such as corned beef and boiled beef obtained using beef. Cooking by using a plant-derived ingredient with beef extract can impart richness and beef flavor to the resulting food product.

The known alternatives for beef extract include the agent for imparting flavor with a pH value of 5.8 obtained by adding wheat gluten dried hydrolysate, hydrochloric acid, ribose and beef or beef fat to a filtrate prepared by suspending plant such as onion in a caustic soda solution and heating the suspension under reflux, and then heating the resulting mixture under reflux (see, for example, Patent Document 1); and the agent for imparting meat flavor to a food product containing a plant protein, characterized by containing (E)-6-nonenal (see, for example, Patent Document 2). There is also known the beef type flavor seasoning containing autolyzed yeast (yeast extract), and containing 40% by mass of protein hydrolysate and 27.0% by mass of yeast paste in addition to tomato puree and apple syrup (see, for example, Patent Document 3).

The known compositions for imparting other flavor than beef flavor include the plant pork-flavor seasoning containing 45% by mass of water, and hydrolyzed soy protein, reducing sugar and plant oil (see, for example, Patent Document 4); the cheese-like seasoning oil containing 80% by mass or more of plant oil (see, for example, Patent Document 5); and the seasoning for imparting kimchi flavor containing chili pepper powder and garlic paste, and containing 80% by mass or more of water (see, for example, Patent Document 6).

### Citation List

### Patent Literature

[Patent Document 1] JP 1981-5141 B
[Patent Document 2] JP 7011095 B
[Patent Document 3] JP 2011-512805 A
[Patent Document 4] CN 112956673 A
[Patent Document 5] JP 2022-133196 A
[Patent Document 6] JP 2016-13105 A

### Summary of the Invention

### Problems to be Solved by the Invention

However, although beef extract is not meat itself, the food product prepared by using beef extract has been undesired by vegans. The flavor imparting agent described in Patent Document 1 also employs beef or beef fat, so vegans cannot eat the food product obtained by using the above agent.

On the other hand, the flavor imparting agent described in Patent Document 2 has (E)-6-nonenal as an active ingredient. However, (E)-6-nonenal has a cucurbit-like smell and is not suitable for the use in a light-flavored plant food product. In addition, while the flavor imparting agent described in Patent Document 3 can impart flavor to a plant food by using a combinaton of fruit syrup, protein hydrolysate and yeast paste, the above agent is not suitable for the use in a plant food product because yeast extract such as yeast paste tends to be avoided by vegans.

The seasonings described in Patent Documents 4 to 6 cannot become an alternative for beef extract, and further have a weak flavor-improving effect or a unique flavor because of the majority of water or plant oil contained.

In view of the above circumstances, it is a first objective of the present invention to provide a seasoning composition being an alternative for beef extract and broadly applicable to a plant food product. It is a second objective of the present invention to provide a composition for improving flavor of a plant food product even with no beef extract used.

### Means of Solving the Problems

The present inventors have conducted intensive research to solve the above problems, and have tried with the trial-and-error process to use a number of ingredients alone or in combination as appropriate, either as they are or by subjecting them to various processing treatments to obtain a seasoning capable of enhancing flavor of a plant-derived ingredient.

As a result of extensive consideration, the present inventors have finally found that a heated seasoning composition with a pH value of 4.50 or more is obtained by subjecting a plant protein degradation product and saccharide to heat treatment in the presence of plant oil and vegetable extract so as to yield the Maillard reaction, and that the heated seasoning composition could impart richness and beef flavor to a plant food product obtained by processing a plant-derived ingredient and make flavor of the plant food product richer. In particular, the present inventors have initially found the surprisingly unexpected finding that the heated seasoning composition containing plant oil while having in a large portion the total amount of 60 wt% or more of the plant protein degradation product, the saccharide and the vegetable extract, and having a pH value of 4.50 or more could impart beef flavor to a plant food product even without using beef or beef fat as described in Patent Document 1.

On the other hand, as a result of further extensive consideration, the present inventors have finally found that methyl 5-hexenoate could impart richness to a plant food product obtained by processing a plant-derived ingredient, thereby allowing flavor of the plant food product to be richer. The present inventors have surprisingly found that the combination of methyl 5-hexenoate with 2-vinylpyrazine could impart beef flavor and richness to the plant food product more significantly as compared with the use of each ingredient independently. The effect of imparting flavor based on a combination of methyl 5-hexenoate and 2-vinylpyrazine was rather a synergistic effect first achieved by the combination of the ingredietns but not an additive effect based on an addition of each effect of the ingredients. This finding that methyl 5-hexenoate or methyl 5-hexenoate and 2-vinylpyrazine could improve flavor of the plant food product was a surprising and unexpected finding first found by the present inventors.

Based on the findings, the present inventors have succeeded in inventing a seasoning composition that can be used as an alternative for beef extract and can season to taste the plant food product, as a solution to the first problem of the present invention. The present inventors have also succeeded in inventing a composition that can improve flavor of the plant food product even without using beef extract, as a solution to the second problem of the present invention. The present invention is an invention completed based on these findings and successful examples initially found by the present inventors.

Therefore, according to one aspect of the present invention, the following are provided.
[1] A heated seasoning composition, comprising a plant protein degradation product, saccharide, vegetable extract, and plant oil, wherein the heated seasoning composition has a pH value equal to or more than 4.50, the total amount of the plant protein degradation product, the saccharide and the vegetable extract is equal to or more than 60 wt% relative to the total amount of the heated seasoning composition, the heated seasoning composition comprises no yeast extract, and the vegetable extract is at least one selected from the group consisting of onion extract, garlic extract, cabbage extract, and Chinese cabbage extract.
[2] The heated seasoning composition according to [1], wherein the heated seasoning composition is a container-packed heated seasoning composition.
[3] The heated seasoning composition according to [1], wherein the heated seasoning composition comprises no animal-derived ingredient.
[4] The heated seasoning composition according to any one of [1] to [3], wherein the plant protein degradation product is at least one selected from the group consisting of wheat gluten hydrolysate, soy protein hydrolysate, and corn protein hydrolysate.
[5] The heated seasoning composition according to any one of [1] to [3], wherein the saccharide is at least one selected from the group consisting of fructose, glucose, sucrose, and a sugar-containing product therewith.
[6] The heated seasoning composition according to any one of [1] to [3], wherein the plant oil is at least one selected from the group consisting of sesame oil, rapeseed oil, soybean oil, and rice oil.
[7] The heated seasoning composition according to any one of [1] to [3], further comprising a pH adjusting agent, wherein the pH adjusting agent is at least one selected from the group consisting of sodium carbonate, sodium hydrogen carbonate, potassium carbonate, and phosphate.
[8] A plant food product, comprising as raw materials the heated seasoning composition according to any one of [1] to [3] and a plant-derived ingredient.
[9] A method for producing a plant food product, comprising cooking by using the heated seasoning composition according to any one of [1] to [3] and a plant-derived ingredient to obtain a plant food product.
[10] A heated composition for imparting beef flavor, comprising a plant protein degradation product, saccharide, vegetable extract, and plant oil, wherein the heated composition has a pH value equal to or more than 4.50, the total amount of the plant protein degradation product, the saccharide and the vegetable extract is equal to or more than 60 wt% relative to the total amount of the heated composition, the heated composition comprises no yeast extract, and the vegetable extract is at least one selected from the group consisting of onion extract, garlic extract, cabbage extract and Chinese cabbage extract.
[11] A method for imparting flavor to a plant food product, comprising cooking by using a heated composition and a plant-derived ingredient, wherein the heated composition comprises a plant protein degradation product, saccharide, vegetable extract, and plant oil, the heated composition has a pH value equal to or more than 4.50, the total amount of the plant protein degradation product, the saccharide and the vegetable extract is equal to or more than 60 wt% relative to the total amount of the heated composition, the heated composition comprises no yeast extract, and the vegetable extract is at least one selected from the group consisting of onion extract, garlic extract, cabbage extract and Chinese cabbage extract.

According to another aspect of the present invention, the following are provided.
[1] A heated seasoning composition, comprising a plant protein degradation product, saccharide, vegetable extract and plant oil, wherein the heated seasoning composition has a pH value equal to or more than 4.50 and the total amount of the plant protein degradation product, the saccharide and the vegetable extract is equal to or more than 60 wt% relative to the total amount of the heated seasoning composition.
[2] The heated seasoning composition according to [1], wherein the heated seasoning composition is a container-packed heated seasoning composition.
[3] The heated seasoning composition according to [1], wherein the heated seasoning composition comprises no animal-derived ingredient and no yeast extract.
[4] The heated seasoning composition according to any one of [1] to [3], wherein the plant protein degradation product is at least one selected from the group consisting of wheat gluten hydrolysate, soy protein hydrolysate, and corn protein hydrolysate.
[5] The heated seasoning composition according to any one of [1] to [3], wherein the saccharide is at least one selected from the group consisting of fructose, glucose, sucrose, and a sugar-containing product therewith.
[6] The heated seasoning composition according to any one of [1] to [3], wherein the vegetable extract is at least one selected from the group consisting of Amaryllidaceae vegetable extract and Brassicaceae vegetable extract.
[7] The heated seasoning composition according to any one of [1] to [3], wherein the vegetable extract is at least one selected from the group consisting of onion extract, garlic extract, cabbage extract, and Chinese cabbage extract.
[8] The heated seasoning composition according to any one of [1] to [3], wherein the plant oil is at least one selected from the group consisting of sesame oil, rapeseed oil, soybean oil, and rice oil.
[9] The heated seasoning composition according to any one of [1] to [3], further comprising a pH adjusting agent, wherein the pH adjusting agent is at least one selected from the group consisting of sodium carbonate, sodium hydrogen carbonate, potassium carbonate, and phosphate.
[10] A plant food product, comprising as raw materials the heated seasoning composition according to any one of [1] to [3] and a plant-derived ingredient.
[11] A method of producing a plant food product, comprising cooking by using the heated seasoning composition according to any one of [1] to [3] and a plant-derived ingredient to obtain a plant food product.
[12] A heated composition for imparting beef flavor, comprising a plant protein degradation product, saccharide, vegetable extract and plant oil, wherein the heated composition has a pH value equal to or more than 4.50 and the total amount of the plant protein degradation product, the saccharide and the vegetable extract is equal to or more than 60 wt% relative to the total amount of the heated composition.
[13] A method for imparting flavor to a plant food product, comprising cooking by using a heated composition and a plant-derived ingredient, wherein the heated composition comprises a plant protein degradation product, saccharide, vegetable extract, and plant oil, the heated composition has a pH value equal to or more than 4.50, and the total amount of the plant protein degradation product, the saccharide and the vegetable extract is equal to or more than 60 wt% relative to the total amount of the heated composition.

According to another aspect of the present invention, the following are provided:
[1] A flavor imparting composition, comprising methyl 5-hexenoate.
[2] A flavor imparting composition, comprising methyl 5-hexenoate and 2-vinylpyrazine.
[3] The flavor imparting composition according to [1] or [2], wherein the flavor imparting composition is a container-packed flavor imparting composition.
[4] The flavor imparting composition according to [1] or [2], wherein the flavor imparting composition is used as a seasoning.
[5] The flavor imparting composition according to [1] or [2], wherein flavor imparting composition is used for a plant food product.
[6] The flavor imparting composition according to [1] or [2], wherein the content of methyl 5-hexenoate is an amount to become 0.001 ppm to 5 ppm in a plant food product used.
[7] The flavor imparting composition according to [2], wherein the content of 2-vinylpyrazine is an amount to become 0.001 ppm to 5 ppm in a plant food product used.
[8] The flavor imparting composition according to [2], wherein the content of methyl 5-hexenoate is an amount to become 0.001 ppm to 5 ppm in a plant food product used and the content of 2-vinylpyrazine is an amount to become 0.01 ppm to 5 ppm in a plant food product used; or the content of methyl 5-hexenoate is an amount to become 0.01 ppm to 5 ppm in a plant food product used and the content of 2-vinylpyrazine is an amount to become 0.001 ppm to 5 ppm in a plant food product used.
[9] A method for imparting flavor to a plant food product, comprising cooking by using methyl 5-hexenoate, or methyl 5-hexenoate and 2-vinylpyrazine, and a plant-derived ingredient.

### Effects of the Invention

The present invention can season to taste a plant food product as an alternative for beef extract. The heated seasoning composition according to one embodiment of the present invention can be composed of a plant protein degradation product, saccharide, vegetable extract and plant oil all of which are not an animal-derived ingredient, so that the product obtained using the heated seasoning composition according to one embodiment of the present invention can still be a plant food product. Therefore, according to the present invention, it is possible to produce a highly palatable plant food product served for dishes of vegetarians and vegans without using components including yeast extract which tend to be avoided by vegetarians and vegans.

The heated seasoning composition according to one embodiment of the present invention is obtained by heating treatment, and further by a simple preparation method, so the composition is suitable for long-term storage and can be produced in large quantities on the industrial scale.

The present invention can impart richness and flavor such as beef flavor to a plant food product and improve flavor of the plant food product, even without using beef extract. On the other hand, the flavor imparting composition according to one embodiment of the present invention contains 5-hexenoate or methyl 5-hexenoate and 2-vinylpyrazine as active ingredients, so that the resulting plant food product can still be a plant food product obtained by using the flavor imparting composition according to one embodiment of the present invention. Therefore, according to the present invention, it is possible to produce a highly palatable plant food product served for dishes of vegetarians and vegans without using components including yeast extract which tend to be avoided by vegetarians and vegans.

The flavor imparting composition according to one embodiment of the present invention can be obtained by a simple preparation method, so the composition can be produced in large quantities on the industrial scale.

### Description of Embodiments

Each aspect of the present invention will now be described in detail. The present invention is not limited only by the matter in this section, and may take various other forms to the extent that its objectives can be achieved.

Unless otherwise specified, each term used herein is used in the meaning commonly used by those skilled in the art in the field of food products containing seasoning and should not be construed to have any meaning that is unduly limited. Also, any speculations and theories herein are made on the basis of the knowledge and experiences of the present inventors and as such, the present invention is not bound by any such speculations and theories.

While the term "composition" is not particularly limited and means compositions as well known, it is, for example, composed of combination of two or more components. The terms "ingredient" and "(raw) material" mean substances used (added) in producing a composition and are synonymous with a component. The "ingredient" and "(raw) material" can exist in the composition, in the state that it is maintained or changed qualitatively and/or quantitatively as compared with those before using.

The term "content" is synonymous with concentration and amount added (amount used), and means the ratio of the amount of a component relative to the total amount of the composition. However, the total content of the components may not exceed 100%. The unit "w/v%" represents the mass volume percent concentration that is synonymous with "% (w/v)", "vol%" represents the volume percent concentration that is synonymous with "% (v/v)", and "wt%" represents the mass percent concentration that is synonymous with "% (w/w)". When a component is a commercial product, the content of the component is preferably the amount of the component contained in the commercial product, or may be the amount of the commercial product itself.

The term "flavor" means aroma that passes from the oral cavity through the nose when taken into the mouth (retronasal), a taste which is perceived on the tongue when taken into the mouth (taste), or both.

The term "food product" emcompasses foods, beverages, or both. The term "processed food product" means a food product obtained by cooking an ingredient. The term "plant food product" means a processed food product mainly using a plant-derived ingredient and using no animal-derived ingredient.

The term "container-packed" means being filled or contained in a sealable gastight container or hermetic container. The gastight container is a container that is impermeable to solid or liquid foreign matter and can prevent loss or evaporation of their content, under a normal handling, transport or storage condition. The hermetic container is a container that is impermeable to gas under a normal handling, transport or storage condition.

The terms "include," "comprise," and "contain" mean that an element(s) other than an element(s) as explicitly indicated can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or substantially consist of an element(s) as explicitly indicated. Such elements include limitations such as components, steps, conditions, and parameters.

The term "and/or" means any one, or an arbitrary combination of two or more, or a combination of all of a plurality of related items listed.

The "ppb" is a unit of measure as it is usually known, specifically 1 ppb is 1/10⁹, and the gram equivalent is 1 ng/g.

The "ppm" is a unit of measure as it is usually known, specifically 1 ppm is 1/10⁶, the mass equivalent is 1 µg/g, and the mass volume equivalent is about 1 mg/l.

The "Maillard reaction" refers to the reaction between amino compound and saccharide to produce a brown substance.

The wording "to" for indicating a range of values is a range that include values preceding and following the wording, and also includes a range excluding any one of the lower and upper limits included in the range. For example, "0 w/v% to 100 w/v%" may be a range of values more than or equal to 0 w/v%, of values less than or equal to 100 w/v%, and of values between 0 w/v% and 100 w/v%. The terms "more than" and "less than" used herein mean the lower and upper limits without including a value following the term, respectively. For example, "more than 1" means a value beyond 1, and "less than 100" means a value below 100. The term "about" means an amount within ±10% of the quantity following the term. For example, "about 100" means 100 ± 10%, i.e., 90 to 110.

The number of digits of an integer equals to its significant figure. For example, 1 has one significant figure and 10 has two significant figures. For a decimal number, the number of digits after a decimal point equals to its significant figure. For example, 0.1 has one significant figure and 0.10 has two significant figures.

### <1. Heated seasoning composition>

One aspect of the present invention is a heated seasoning composition that can be substituted for beef extract and season to taste a plant food product.

### [Outline of heated seasoning composition]

The heated seasoning composition according to one embodiment of the present invention contains a plant protein degradation product, saccharide, vegetable extract, and plant oil.

The heated seasoning composition according to one embodiment of the present invention can impart richness, beef flavor, or both to a plant food product obtained by using a plant-derived ingredient. Namely, the plant food product using the heated seasoning composition according to one embodiment of the present invention has improved richness and/or beef flavor as compared with the plant food product not using the heated seasoning composition according to one embodiment of the present invention. The effect of imparting richness and/or beef flavor to the plant food product achieved by the heated seasoning composition according to one embodiment of the present invention is also referred to as "flavor imparting effect". In addition, the heated seasoning composition according to one embodiment of the present invention may be used to season to taste a food product in the same manner as ordinary seasonings such as soy sauce and ponzu sauce, and preferably used to achieve the flavor imparting effect.

### [Plant protein degradation product]

The plant protein degradation product is obtained by hydrolyzing a raw material containing plant protein with acid, alkali, enzyme or the other. While the raw material containing plant protein is not particularly limited, examples of the raw material include cereals such as wheat, barley, rice and corn; beans such as soybean and pea; and tuberous, and corm vegetables such as potato and sweet potato.

The plant protein degradation product is not particularly limited, as long as the product is a hydrolysate of the raw material containing plant protein. Examples of the product include preferably wheat gluten hydrolysate, soy protein hydrolysate and corn protein hydrolysate, which are commercially easily available, and more preferably wheat gluten hydrolysate treated with microorganism because of the rich content of peptide, thereby enhancing the flavor imparting effect of the heated seasoning composition according to one embodiment of the present invention. While the plant protein degradation product may be in various forms such as liquid, solid, or semi-solid including paste, the liquid form may be preferable because of its good compatibility with the saccharide. The plant protein degradation product may be any one either individually or in combination of two or more of those listed above.

The plant protein degradation product may be obtained by hydrolyzing the raw material containing plant protein with acid, alkali, enzyme or fermentation, and may be a commercial product. The plant protein degradation product may be obtained, for example, by subjecting the raw material containing plant protein to treatment using microorganisms such as Aspergillus bacteria. The raw material containing plant protein may also be subjected to pretreatment including deamidation treatment prior to the hydrolyzation treatment. Examples of the commercial product of the plant protein degradation product include the "HAKKOU UMAMI CYOUMI EKI (Fermented umami seasoning liquid)" (Kikkoman Foods) as wheat gluten hydrolysate, "KOIKUCHI AJI EKI (Concentrated taste liquid)" (Ajinomoto) as soy protein hydrolysate, and "Amicin C" (Shin-Shin Foods) as corn protein hydrolysate.

The content of the plant protein degradation product is not particularly limited, as long as the content is an amount by which the heated seasoning composition according to one embodiment of the present invention can achieve the flavor imparting effect. Examples of the content include, from the viewpoint of the sufficient Maillard reaction with the saccharide and the taste of the plant protein degradation product itself, preferably 30 wt% to 80 wt%, more preferably 40 wt% to 80 wt%, even more preferably 45 wt% to 70 wt%, and still even more preferably 50 wt% to 65 wt%, relative to the total amount of the heated seasoning composition. The content represents an amount of the plant protein degradation product with unsalted soluble solids ranging from 21% to 29%. When the plant protein degradation product with unsalted soluble solids not ranging from 21% to 29% is used, the corresponding amount to the above amount in unsalted soluble solids equivalent may be used.

### [Saccharide]

While the saccharide is obtained by excluding food fiber from carbohydrate, examples of the saccharide include monosaccharides; oligosaccharides and polysaccharides composed of two or more linked saccharides, sugar alcohols, and the other saccharides.

Monosaccharides are composed of a single sugar molecule. Examples of monosaccharides include tetroses such as threose and erythrose; pentoses such as arabinose, xylose, ribose, ribulose and xylulose; hexoses such as glucose (dextrose), psicose, galactose, fructose (fruit sugar) and mannose; heptoses such as aldoheptose and heptulose; and octoses such as octulose.

Oligosaccharides are composed of from two or more to about ten linked monosaccharide molecules. Examples of oligosaccharides include lactose, maltooligosaccharides, lactulose, palatinose, palatinose oligosaccharides, fructooligosaccharides, raffinose, xylooligosaccharides, isomaltooligosaccharides, trehalose, galactooligosaccharides, lactosucrose, soy oligosaccharides, beet oligosaccharides, gentioligosaccharides, nigerooligosaccharides, sucrose, maltose and cyclodextrin.

Polysaccharides are composed of 10 or more linked monosaccharide molecules. Examples of polysaccharides include cellulose, starch, processed starch, galactan, glycogen and dextran.

Sugar alcohols are polyhydric alcohols with the carbonyl groups of sugar molecules reduced. Examples of sugar alcohols include reduced maltose (maltitol), sorbitol, lactitol, erythritol and reduced starch saccharides.

The saccharide may be a sugar-containing material including the above-mentioned saccharides and/or sugar alcohols. Examples of the sugar-containing material include high fructose corn syrup, granulated sugar, refined sugar, maple syrup, honey and corn syrup.

The saccharide is not particularly limited, as long as the saccharide can undergo the Maillard reaction with the plant protein degradation product. The saccharide may be used either individually or in combination of two or more of those listed above. For example, the saccharide may be preferably monosaccharides and oligosaccharides as well as the sugar-containing material therewith from the viewpoint of the taste of the saccharide itself and the reactivity with the plant protein degradation product, and more preferably fructose, glucose and sucrose as well as high fructose corn syrup, granulated sugar and maple syrup as the sugar-containing material because of enhancing the flavor imparting effect of the heated seasoning composition according to one embodiment of the present invention.

The saccharide may be produced by methods commonly known to those skilled in the art or may be available on the market. Examples of the commercially available saccharide include "New Fructo 55" (Showa Sangyo) as high fructose corn syrup, "KG-25-70" (Showa Sangyo) as liquid glucose, "Pure Fructose" (Kato Chemical) as fructose, "BARA JIRUSHI (Rose Mark) Granulated Sugar" (Dainippon Meiji Sugar) as sucrose, and "Quebec Maple Syrup" (Queen Bee Garden) as maple syrup. While the saccharide may be in various forms such as liquid, solid, or semi-solid including paste, the liquid form may be preferable because of its good compatibility with the plant protein degradation product. The saccharide may be any one either individually or in combination of two or more of those listed above.

The content of the saccharide is not particularly limited, as long as the content is an amount by which the heated seasoning composition according to one embodiment of the present invention can achieve the flavor imparting effect. Examples of the content include, from the viewpoint of the sufficient Maillard reaction with the plant protein degradation product and the taste of the saccharide itself, preferably 5 wt% to 40 wt%, more preferably 10 wt% to 35 wt%, even more preferably 15 wt% to 35 wt%, and still even more preferably 20 wt% to 30 wt%, relative to the total amount of the heated seasoning composition. The content represents an amount of liquid sugar or solid sugar with a Brix value of 73% or more. When the saccharide with a Brix value less than 73% is used, the corresponding amount to the above amount in Brix equivalent may be used.

In addition, the content of the plant protein degradation product and the content of the saccharide may be preferably in a certain relationship so that the Maillard reaction can occur so as to achieve the flavor imparting effect of the heated seasoning composition according to one embodiment of the present invention. The ratio of the content of the plant protein degradation product (A) to the content of the saccharide (B) ([A]/[B]) is, for example, preferably 0.05 to 10, more preferably 0.1 to 8, and even more preferably 0.5 to 5.

### [Vegetable extract]

The vegetable extract is a processed vegetable product that contains components contained in vegetables and is obtained by subjecting vegetables as they are or in the dried form to processing treatment such as crushing treatment such as shredding, grinding, grating and pasting; squeezing treatment; and extraction treatment with a solvent such as water and ethanol.

The type of vegetables is not particularly limited. On the other hand, the present inventors have found that the heated seasoning composition according to one embodiment of the present invention can achieve the preferable flavor imparting effect when vegetables used as a raw material of the vegetable extract contain a large amount of sulfur compounds. This is consistent with the fact that the known aroma components generated by heating meat include sulfur-containing aromatic compounds generated by heating sulfur-containing amino acids or sulfur-containing peptides including methionine, cysteine and cystine. Thus, examples fo the type of vegetables include preferably vegetables containing a large amount of sulfur compounds. Accordingly, the vegetable extract is preferably vegetable extract containing a large amount of sulfur compounds, more preferably Amaryllidaceae vegetable extract and Brassicaceae vegetable extract, and even more preferably onion extract, garlic extract, cabbage extract and Chinese cabbage extract.

The vegetable extract may be produced by methods commonly known to those skilled in the art, or may be available on the market. The methods of producing the vegetable extract include the method of adding vegetables to water and boiling them, the method of grinding vegetables, and the method of drying vegetables followed by reconstituting the resultant with water. Examples of the commercially available vegetable extract include "Onion Extract" (Tokai Bussan) as onion extract, "Grated Garlic KN0" (Asano) as garlic extract, "Cabbage Extract" (Tokai Bussan) as cabbage extract, and "Chinese Cabbage Extract" (Tokai Bussan) as Chinese cabbage extract. While the vegetable extract may be in various forms such as liquid, solid, or semi-solid including paste, the liquid form may be preferable because of its good compatibility with the plant protein degradation product and the saccharide. The vegetable extract may be any one either individually or in combination of two or more of those listed above. The vegetable extract is more preferably onion extract, cabbage extract and Chinese cabbage extract, in order not to impart excessive flavor to the heated seasoning composition according to one embodiment of the present invention.

The content of the vegetable extract is not particularly limited, as long as the content is an amount by which the vegetable extract can be involved in the Maillard reaction between the plant protein degradation product and the saccharide and the heated seasoning composition according to one embodiment of the present invention can achieve the flavor imparting effect. Examples of the content include, from the viewpoint of the taste of the vegetable extract itself, preferably 0.5 wt% to 35 wt%, more preferably 1 wt% to 30 wt%, even more preferably 2.0 wt% to 20 wt%, and still even more preferably 3.0 wt% to 25 wt%, relative to the total amount of the heated seasoning composition. The content represents an amount of the vegetable extract with a Brix value of 5% to 40%. As for each vegetable extract, when the vegetable extract used has no Brix value within the above range, the corresponding amount to the above amount in Brix equivalent may be used.

The content of the plant protein degradation product and the content of the vegetable extract may be preferably in a certain relationship, so that the heated seasoning composition according to one embodiment of the present invention can achieve the flavor imparting effect. The ratio of the content of the plant protein degradation product (A) to the content of vegetable extract (C) ([A]/[C]) is, for example, preferably 0.5 to 40, more preferably 1 to 30, even more preferably 1.5 to 25, and still even more preferably 1.5 to 15.

### [Plant oil]

The plant oil is derived from plants. The plant oil generates meat fatty aroma by being combined with components such as the vegetable extract and further is involved in the Maillard reaction between the plant protein degradation product and the saccharide, so that the heated seasoning composition according to one embodiment of the present invention may achieve the flavor imparting effect.

Plants from which the plant oil are derived include rapeseed, soybean, sunflower seed, cottonseed, peanuts, rice bran, rice, corn, safflower, olive, sesame, groundnuts, benibana, perilla leave, sunflower, sesame seed, flax, cacao, palm, oil palm, sal trees, grape seed, perilla, algae and nuts. The plant oil may be a processed oil obtained by subjecting oil derived from plants to processing treatment such as hydrogenation, fractionation and transesterification. Examples of the plant oil include sesame oil, rapeseed oil, soybean oil, rice oil, sunflower oil, cottonseed oil, peanut oil, rice bran oil, corn oil, safflower oil, olive oil, kapok seed oil, sesame seed oil, evening primrose oil, palm oil, shea fat, sal fat, cacao fat, coconut oil, and palm kernel oil. The plant oil is, from the viewpoint of the common use as edible oil and the taste of the plant oil itself, preferably sesame oil, rapeseed oil, soybean oil and rice oil, and more preferably sesame oil from the viewpoint that the heated seasoning composition according to one embodiment of the present invention can achieve the excellent flavor imparting effect.

The plant oil may be produced by methods commonly known to those skilled in the art, or may be available on the market. While the plant oil may be in various forms such as liquid, solid, or semi-solid including paste, the liquid form may be preferable because of its good compatibility with the plant protein degradation product and the saccharide. The plant oil may be any one either individually or in combination of two or more of those listed above.

The content of the plant oil is not particularly limited, as long as the content is an amount by which the plant oil can be involved in the Maillard reaction between the plant protein degradation product and the saccharide and the heated seasoning composition according to one embodiment of the present invention can achieve the flavor imparting effect. Examples of the content include, from the viewpoint of the taste of the plant oil itself, preferably 0.005 wt% to 20 wt%, more preferably 0.01 wt% to 10 wt%, even more preferably 0.03 wt% to 5 wt%, and still even more preferably 0.1 wt% to 2 wt%, relative to the total amount of the heated seasoning composition.

In addition, the content of the plant protein degradation product and the conten of the plant oil may be preferably in a certain relationship, so that the heated seasoning composition according to one embodiment of the present invention can achieve the flavor imparting effect. The ratio of the content of the plant protein degradation product (A) to the content of the plant oil (D) ([A]/[D]) is, for example, preferably 5 to 10,000, more preferably 10 to 5,000, even more preferably 20 to 2,000, and still even more preferably 30 to 500.

### [Heated seasoning composition]

The heated seasoning composition according to one embodiment of the present invention may contain other components in addition to the plant protein degradation product, the saccharide, the vegetable extract and the plant oil. The other components are not particularly limited, and include components used in food products and seasonings, such as pH adjusting agents, spices, thickening agents, coloring agents, preservatives, and antioxidants.

The pH adjusting agent is not particularly limited, and for example, the pH adjusting agent is preferably an alkaline agent since the resulting composition tends to have the lower pH value when the mixture of the plant protein degradation product, the saccharide, the vegetable extract and the plant oil is subjected to the Maillard reaction by heating treatment. While the alkaline agent is not particularly limited, examples of the alkaline agent include sodium carbonate, sodium hydrogen carbonate, potassium carbonate and phosphate, preferably sodium carbonate that is commonly used in producing food products. The pH adjusting agent may be any one either individually or in combination of two or more of those listed above.

Specifically, the other components include liquid components such as water, soy sauce, sweet taste components (such as sweet cooking rice wine), acidic taste components (such as vinegar and flavorful acidic citrus fruits like apple, yuzu, and lemon), alcohol liquor components (such as wine and seishu (refined sake)), and fruit juices (such as apple juice); solid components such as table salt, grain components (such as bread crumbs, flour and oatmeal), spices (such as ginger, chili pepper, pepper, basil, oregano, ginger and mixed spices), thickening agents (such as thickening polysaccharides like carrageenan), chemical seasonings (such as glutamic acid, sodium glutamate, glycine, sodium inosinate and sodium guanylate), flavors, miso and curry powder.

The heated seasoning composition according to one embodiment of the present invention preferably contains no animal-derived ingredient such as meat, egg and dairy products, and no yeast extract, when applied to the plant food product. The expression "contain no animal-derived ingredient and no yeast extract" means that the animal-derived ingredient and the yeast extract (collectively referred to as "animal-derived ingredient and the like") are not intentionally contained, except for the case where the animal-derived ingredient and the like are unavoidably contained by raw materials containing the animal-derived ingredient and the like together with other components or by executing process steps using such raw materials. Therefore, the expression "contain no animal-derived ingredient and no yeast extract" means to contain the animal-derived ingredient and the like in a very small amount even if the animal-derived ingredient and the like are contained. For example, in this case, the content of the animal-derived ingredient and the like may be preferably in the range between 0% by mass and 0.1% by mass.

The other components may be any one either individually or in combination of two or more of those listed above. The content of the other components may be appropriately set, as long as the objective of the present invention can be achieved. In order that the heated seasoning composition according to one embodiment of the present invention can achieve the flavor imparting effect, the content of the other components is preferably 30 wt% or less, more preferably 0 wt% to 25 wt%, more preferably 0 wt% to 15 wt%, even more preferably 0 wt% to 10 wt%, and still even more preferably 0 wt% to 5 wt%, relative to the total amount of the heated seasoning composition.

In order that the heated seasoning composition according to one embodiment of the present invention can achieve the flavor imparting effect, the plant protein degradation product, the saccharide and the vegetable extract account for a large portion of components contained. Specifically, in the heated seasoning composition according to one embodiment of the present invention, the total amount of the content of the plant protein degradation product, the content of saccharide and the content of vegetable extract is 60 wt% or more, from the viewpoint that the heated seasoning composition according to one embodiment of the present invention can achieve the excellent flavor imparting effect, preferably 65 wt% to 99.9 wt%, more preferably 75 wt% to 99.7 wt%, even more preferably 85 wt% to 99.5 wt%, and still even more preferably 90 wt% to 99.5 wt% or 95 wt% to 99.5 wt%, relative to the total amount of the heated seasoning composition.

The form of the heated seasoning composition according to one embodiment of the present invention is not particularly limited, and for example, the liquid form is preferable because of its good compatibility with ingredients. Accordingly, the preferable embodiment of the present invention is a heated liquid seasoning composition.

The heated seasoning composition according to one embodiment of the present invention may have a pH value of 4.50 or more. Examples of the pH value include, from the viewpoint of achieving the excellent flavor imparting effect, preferably 4.50 to 6.40, more preferably 4.50 to 6.20, and even more preferably 4.55 to 6.00. In addition, before the heated seasoning composition according to one embodiment of the present invention is heated, the pH value is preferably 5.00 to 7.50, and more preferably 5.50 to 7.00. The heated seasoning composition according to one embodiment of the present invention preferably further contains the pH adjusting agent in order to have such a pH value. The content of the pH adjusting agent is preferably 0.01 wt% to 10 wt%, and more preferably 0.5 wt% to 5 wt%.

The heated seasoning composition according to one embodiment of the present invention is produced by the Maillard reaction between the plant protein degradation product and the saccharide in the presence of the plant oil and the vegetable extract by heating treatment, so that the composition may impart flavor such as richness and beef flavor to the plant food product. The condition of the Maillard reaction may be a heating treatment condition that can yield the Maillard reaction.

The heating treatment condition is not particularly limited, as long as the Maillard reaction occurs between the plant protein degradation product and the saccharide in the presence of the plant oil and the vegetable extract. Examples of the condition include preferably the condition where the heating temperature is 80°C or more and the heating time is 1 hour or more, more preferably the condition where the heating temperature is 85°C to 90°C and the heating time is 1 hour to 24 hours, even more preferably the condition where the heating temperature is about 90°C and the heating time is 1.5 hours to 8 hours, and still even more preferably the condition where the heating temperature is about 90°C and the heating time is 2.5 hours to 7 hours. The temperature in the heating treatment means the temperature of the composition (product temperature), and the time in the heating treatment means the duration from the time when the predetermined temperature reached considered as 0 hour to the time sustaining the temperature (temperature holding time). According to another aspect of the present invention, there is provided a method of producing the heated seasoning composition according to one embodiment of the present invention, including subjecting a seasoning composition to heating treatment under the condition where the heating temperature and the heating time are within the above range to obtain the heated seasoning composition according to one embodiment of the present invention, wherein the seasoning composition contains the plant protein degradation product, the saccharide, the vegetable extract and the plant oil and has a pH value of 4.50 or more, and the total amount of the plant protein degradation, the saccharide and the vegetable extract is 60 wt% or more relative to the total amount of components used.

The condition of the heating treatment may be set based on components that increase or decrease as a result of the Maillard reaction. The present inventors have confirmed that by subjecting a mixture of the plant protein degradation product, the saccharide, the vegetable extract and the plant oil to the heating treatment, the levels of methyl 5-hexenoate and 2-vinylpyrazine increase as compared with the levels before the heating treatment. Therefore, the heating treatment is preferably carried out under the condition where the levels of methyl 5-hexenoate and/or 2-vinylpyrazine increase. For example, given that the levels of methyl 5-hexenoate and 2-vinylpyrazine are about 0.2 ppb and about 32 ppb, respectively, before the heating treatment, the heating treatment may be carried out preferably under the condition where the level of methyl 5-hexenoate becomes 0.5 ppb or more and/or the level of 2-vinylpyrazine becomes 50 ppb or more, more preferably under the condition where the level of methyl 5-hexenoate becomes 1.0 ppb or more and/or the level of 2-vinylpyrazine becomes 80 ppb or more, and even more preferably under the condition where the level of methyl 5-hexenoate becomes 1.0 ppb to 5.0 ppb and/or the level of 2-vinylpyrazine beocmes 80 ppb to 300 ppb. Methyl 5-hexenoate is a compound with the CAS registration number of 2396-80-7 and represented by the following formula (1). 2-Vinylpyrazine is a compound with the CAS registration number of 4177-16-6 and represented by the following formula (2).

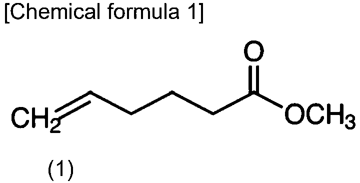

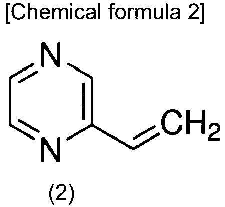

The heated seasoning composition according to one embodiment of the present invention may be a container-packed composition filled in a sealable gastight container or hermetic container. The container is not particularly limited, as long as the cotainer is the gastight container or hermetic container. Examples of the container include packaging containers such as single-layer or multilayer (laminate) film bags, retort pouches, vacuum packs, formed containers, bottles and cans, made of materials such as metals like aluminum and steel, paper, plastic like PET, and glass. The container-packed composition can be distributed on the market and be commercially available independently by itself. The container with lid used for the purpose of storing the food product at home is a closed container, and is strictly distinguished from the gastight container and hermetic container, especially the hermetic container.

The flavor imparting effect achieved by the heated seasoning composition according to one embodiment of the present invention may be the effect such that the plant food product using the composition has stronger richness, beef flavor or both, as compared with the plant food product (control) without using the composition under the same condition. The flavor imparting effect encompasses the effect of imparting beef flavor to the plant food product that normally has no such beef flavor as well as the effect of imparting richness to the plant food product such that the plant food product has richness not normally provided by the product, or such that the plant food product has better richness than that originally provided by the product.

The flavor imparting effect can be confirmed by the method described in Examples below. For example, the effect may be the effect to extent that the evaluation results in at least one, and preferably all of two selected from the group consisting of strongly feeling in terms of "richness" and strongly feeling in terms of "beef flavor" as compared with the control when the sensory evaluation for the evaluation items "richness" and "beef flavor" is conducted on the plant bouillon using the heated seasoning composition according to one embodiment of the present invention. The stronger flavor imparting effect makes the plant food product used more palatable. From the viewpoint, examples of the flavor imparting effect include preferably the effect that results in the comprehensive evaluation of "++" or "+", and more preferably the comprehensive evaluation of "++", when the same sensory evaluation is conducted.

The usage mode of the heated seasoning composition according to one embodiment of the present invention is not particularly limited, and may be either the plant food product or animal food product, preferably the plant food product because of strongly achieving the flavor imparting effect. While the plant food product is not particularly limited, examples of the product include plant bouillon, sukiyaki warishita (sauce), dressing, salad, soy sauce, sauce, ketchup, tare, tsuyu, ponzu, Chinese sauce, soup, noodles, mentsuyu, plant patties, plant milk, cooking sake and seasoning oil. In addition, the plant food product contains no animal-derived ingredient. Since the heated seasoning composition according to one embodiment of the present invention is suitable for the plant food product, the composition is preferably the heated seasoning composition for the plant food product, more preferably the heated seasoning composition for the plant food product served for vegetarians and vegans, and even more preferably the heated seasoning composition for the plant food product served for vegans.

The amount used of the heated seasoning composition according to one embodiment of the present invention may be set appropriately depending on the type and amount of the ingredient used along with or of the processed food product produced by the heated seasoning composition according to one embodiment of the present invention, and is not particularly limited. Examples of the amount used include preferably 0.001 wt% to 20 wt%, more preferably 0.01 wt% to 10 wt%, and even more preferably 0.1 wt% to 5 wt%, relative to the processed food product.

While the method of producing the heated seasoning composition according to one embodiment of the present invention is not particularly limited, examples of the method include generally known methods of producing seasonings by mixing components, specifically a method including mixing the plant protein degradation product, the saccharide, the vegetable extract, the plant oil and optionally other components by subjecting them to mixing with means such as agitation at room temperature or under heating. The other components may be pretreated by in advance subjecting them to treatment such as shredding, pulverizing, swelling and heating.

The heated seasoning composition according to one embodiment of the present invention is preferably subjected to antiseptic treatment such as sterilization treatment with heating and filtration in view of the preservability. When the heating treatment is selected for the Maillard reaction, the heated seasoning composition according to one embodiment of the present invention may be a heated composition or a heated sterilized composition. When the heated seasoning composition according to one embodiment of the present invention is subjected to retort sterilization, the retort sterilization may be carried out under normal pressure or under pressure at 100°C to 130°C, preferably about 120°C, for 1 minute to 30 minutes, preferably about 10 minutes.

A non-limiting specific embodiment of the present invention is a heated seasoning composition containing the following components (A) to (D) and having the following characteristics (E) to (G).
Component (A) 30 wt% to 80 wt% of plant protein degradation product
Component (B) 5 wt% to 40 wt% of saccharide
Component (C) 0.5 wt% to 35 wt% of vegetable extract
Component (D) 0.005 wt% to 20 wt% of plant oil
Characteristic (E) pH value of 4.50 or more
Characteristic (F) heated
Characteristic (G) total amount of components (A) to (C) of 60 wt% or more

Another non-limiting specific embodiment of the present invention is a heated seasoning composition containing the following components (A) to (D) and having the following characteristics (E) to (I).
Component (A) 30 wt% to 80 wt% of plant protein degradation product
Component (B) 5 wt% to 40 wt% of saccharide
Component (C) 0.5 wt% to 35 wt% of vegetable extract
Component (D) 0.005 wt% to 20 wt% of plant oil
Characteristic (E) pH value of 4.50 or more
Characteristic (F) heated
Characteristic (G) total amount of components (A) to (C) of 60 wt% or more
Characteristic (H) the ratio of the content of component (A) ([A]) to the content of component (C) ([C]) ([A]/[C]) of 0.5 to 40
Characteristic (I) the ratio of the content of component (A) ([A]) to the content of component (D) ([D]) ([A]/[D]) of 5 to 10,000

Another non-limiting specific aspect of the present invention is a heated seasoning composition containing the following components (A) to (D) and having the following characteristics (E) to (I).
Component (A) 45 wt% to 70 wt% of plant protein degradation product
Component (B) 15 wt% to 35 wt% of saccharide
Component (C) 2.0 wt% to 20 wt% of vegetable extract
Component (D) 0.03 wt% to 5 wt% of plant oil
Characteristic (E) pH value of 4.50 or more
Characteristic (F) heated
Characteristic (G) total amount of components (A) to (C) of 70 wt% to 99.7 wt%
Characteristic (H) the ratio of the content of component (A) ([A]) to the content of component (C) ([C]) ([A]/[C]) of 1.5 to 25
Characteristic (I) the ratio of the content of component (A) ([A]) to the content of component (D) ([D]) ([A]/[D]) of 20 to 2,000

### [Plant food product]

Cooking at room temperature or by heating using the heated seasoning composition according to one embodiment of the present invention and a plant-derived ingredient may produce a highly palatable plant food product with improved flavor including richness and beef flavor. Another aspect of the present invention is a plant food product containing as raw materials the heated seasoning composition according to one embodiment of the present invention and a plant-derived ingredient. Another aspect of the present invention is a method of producing a plant food product including cooking by using the heated seasoning composition according to one embodiment of the present invention and a plant-derived ingredient to obtain a plant food.

The plant-derived ingredient is not particularly limited, as long as the ingredient is derived from plants generally used as ingredients. Examples of the plant-derived ingredient include vegetables such as Japanese radishes, onions, Japanese leeks, Chinese cabbages, carrots, burdocks, lotus roots, gingers, garlics, cabbages, green peppers, tomatoes, corns, and bamboo shoots; potherbs such as perillas, parsleys, celeries, chives and Japanese honeyworts; mushrooms such as shiitake mushrooms, mushrooms, enoki mushrooms and shimeji mushrooms; fruits such as apples, pears, kiwis, pineapples and plums; seeds such as sesames, nuts and chestnuts; and seaweeds such as hijiki seaweeds, kelps and wakame seaweeds. The plant-derived ingredient may be a plant processed food product such as tofu, fried tofu, konjak and soy protein. Namely, the plant-derived ingredient may be subjected to processing treatment such as grating, pasting, grinding, shredding, cutting into dice, rectangle and other shape, baking, and stir-frying.

The following may be used in cooking the plant food product: sugars such as sugar and granulated sugar, oil such as sesame oil and salad oil, and seasonings such as soy sauce and pepper.

The method for cooking by using the heated seasoning composition according to one embodiment of the present invention is not particularly limited, and may be set appropriately according to the type and the amount of the plant-derived ingredient used and the type of the plant food product obtained, and the other. Examples of the cooking method include normal heating cooking methods such as stir-frying, frying, baking, steaming, heating with microwave oven, heating with hot air and heating in hot water.

The plant food product according to one embodiment of the present invention has better richness, beef flavor or both, as compared with the product cooked without using the heated seasoning composition according to one embodiment of the present invention. Alternatively, the plant food product according to one embodiment of the present invention has the same level of richness, beef flavor or both, as compared with the product cooked with using an effective amount of beef extract instead of the heated seasoning composition according to one embodiment of the present invention. For example, in the bouillon type food product, the 0.2 wt% amount of the heated seasoning composition according to one embodiment of the present invention may correspond to the 1 wt% to 2 wt% amount of beef extract. In sukiyaki and dressing, the 0.5 wt% amount of the heated seasoning composition according to one embodiment of the present invention may also correspond to the 2 wt% amount of beef extract.

### [Another aspect of the present invention]

The heated seasoning composition contains the plant protein degradation product, the saccharide, the vegetable extract and the plant oil, has a pH value of 4.50 or more, and has the total amount of the plant protein degradation product, the saccharide and the vegetable extract of 60 wt% or more relative to the total amount of the composition, thereby imparting richness, beef flavor or both to the plant food product. Therefore, another aspect of the present invention is a heated composition for imparting beef flavor, containing the plant protein degradation product, the saccharide, the vegetable extract and the plant oil, having a pH value of 4.50 or more, and having the total amount of the plant protein degradation product, the saccharide and the vegetable extract being 60 wt% or more relative to the total amount of the composition. In addition, another aspect of the present invention is a heated composition for imparting beef flavor to a plant food product, containing the plant protein degradation product, the saccharide, the vegetable extract and the plant oil, having a pH value of 4.50 or more, and having the total amount of the plant protein degradation product, the saccharide and the vegetable extract being 60 wt% or more relative to the total amount of the composition.

Another aspect of the present invention is a method for imparting flavor to a plant food product, including cooking by using a heated seasoning composition containing the plant protein degradation product, the saccharide, the vegetable extract and the plant oil, having a pH value of 4.50 or more, and having the total amount of the plant protein degradation product, the saccharide and the vegetable extract being 60 wt% or more relative to the total amount of the composition, and a plant-derived ingredient.

### <2. Flavor imparting composition>

Another aspect of the present invention is a flavor imparting composition that can improve flavor of the plant food product even without using beef extract.

### [Outline of flavor imparting composition]

First aspect of the present invention is a flavor imparting composition containing methyl 5-hexenoate. Second aspect of the present invention is a flavor imparting composition containing methyl 5-hexenoate and 2-vinylpyrazine. As used herein, methyl 5-hexenoate or methyl 5-hexenoate and 2-vinylpyrazine may be collectively referred to as "active ingredient".

The flavor imparting composition according to one embodiment of the present invention may impart richness, beef flavor or both to the plant food product obtained by using the plant-derived ingredient. Namely, the plant food product using the flavor imparting composition according to one embodiment of the present invention has better richness and/or beef flavor as compared with the plant food product without using the flavor imparting composition according to one embodiment of the present invention. The above effect of imparting richness and/or beef flavor to the plant food product achieved by the flavor imparting composition according to one embodiment of the present invention is also referred to as "flavor imparting effect".

### [Active ingredient]

Methyl 5-hexenoate is a compound with the structure represented in the formula (1).

The content of methyl 5-hexenoate may be the amount enough to achieve the flavor imparting effect. As described on Table 1 in Examples below, the present inventors have found that the content of 0.01 ppm or more of methyl 5-hexenoate or the content of 0.001 ppm or more of methyl 5-hexenoate in addition to 2-vinylpyrazine allows the plant food product to have stronger richness. On the other hand, when the content of methyl 5-hexenoate is much larger, the plant food product may have flavor that is not originally perceived with the plant food product (unusual flavor). For example, when the plant food product has 10 ppm of methyl 5-hexenoate, the plant food product may emit unusual kerosene-like flavor.

Therefore, the content of methyl 5-hexenoate is the amount such that the plant food product has preferably 0.001 ppm or more to less than 10 ppm, and from the viewpoint of achieving the better flavor imparting effect, more preferably 0.001 ppm to 5 ppm, even more preferably 0.01 ppm to 5 ppm, and still even more preferably 0.1 ppm to 3 ppm. The term "amount such that the plant food product has 0.001 ppm to 5 ppm of methyl 5-hexenoate" means, for example, the amount such that 100 g of plant food product contains 0.1 µg to 500 µg of methyl 5-hexenoate.

For example, in the case where the flavor imparting composition according to one embodiment of the present invention is used at the amount of 1 wt% for the plant food product, when the flavor imparting composition according to one embodiment of the present invention has 0.1 ppm to 500 ppm of methyl 5-hexenoate, the content of methyl 5-hexenoate becomes 0.001 ppm to 5 ppm in the plant food product.

2-vinylpyrazine is a compound with the structure represented in the formula (2).

The content of 2-vinylpyrazine may be the amount capable of achieving the flavor imparting effect. As described on Table 1 in Examples below, the present inventors have found that when the plant food product contains methyl 5-hexenoate and further has 0.001 ppm or more of 2-vinylpyrazine, the plant food product can have stronger richness and beef flavor. On the other hand, when the content of 2-vinylpyrazine is much larger, the plant food product may have flavor that is not originally perceived with the plant food product (unusual flavor). For example, when the plant food product has 10 ppm of 2-vinylpyrazine, the plant food product may emit unusual flavor like tingling sensation on the tongue.

Therefore, the content of 2-vinylpyrazine is the amount such that the plant food product has preferably 0.001 ppm or more to less than 10 ppm, and from the viewpoint of achieving the better flavor imparting effect, more preferably 0.001 ppm to 5 ppm, even more preferably 0.01 ppm to 5 ppm, and still even more preferably 0.1 ppm to 3 ppm.

For example, in the case where the flavor imparting composition according to one embodiment of the present invention is used at the amount of 1 wt% for the plant food product, when the flavor imparting composition according to one embodiment of the present invention has 0.1 ppm to 500 ppm of 2-vinylpyrazine, the content of 2-vinylpyrazine becomes 0.001 ppm to 5 ppm in the plant food product.

The total amount of the content of the active ingredient is not particularly limited. In order that the plant food product can produce the active effect and has no stronger unusual flavor, the content is the amount such that the plant food product has preferably 0.01 ppm or more to less than 10 ppm, and from the viewpoint of producing the better flavor imparting effect, more preferably 0.1 ppm to 5 ppm, and even more preferably 0.5 ppm to 4ppm.

For example, provided that the flavor imparting composition according to one embodiment of the present invention is used at the amount of 1 wt% for the plant food product, when the flavor imparting composition according to one embodiment of the present invention has 50 ppm to 100 ppm of 5-hexenoate and 50 ppm to 100 ppm of 2-vinylpyrazine, each content of 5-hexenoate and 2-vinylpyrazine is 0.5 ppm to 1 ppm, and the total content of them is 1.0 ppm to 2 ppm, in the plant food product.

The active ingredient used may be the active ingredient itself, or as the active ingredientcontaining material containing the active ingredient. When the active ingredient itself is used, the active ingredient may be a commercially available product.

### [Flavor imparting composition]

The flavor imparting composition according to one embodiment of the present invention may contain other components in addition to the active ingredient. While the other components are not particularly limited, examples of the other components include components used in food products and seasonings, specifically, liquid components such as water, soy sauce, alcohol, sweet taste components (e.g., mirin (sweet cooking rice wine), liquid sugar, starch syrup), acidic components (e.g., vinegar, apple, yuzu, lemon, other aromatic citrus fruits), fat or oil components (e.g., sesame oil, olive oil, salad oil, soybean oil, Chinese chili oil), alcoholic liquor components (e.g., wine, sake), and fruit juices (e.g., apple juice); solid components such as salt, saccharides (e.g., sugar, glucose, fructose, syrup, isomerized liquid sugar), grain components (e.g., breadcrumbs, wheat flour, oatmeal), spices (e.g., ginger, chili, pepper, basil, oregano, ginger, mixed spice), thickening agents (e.g., polysaccharide thickening agents such as carrageenan, starch, processed starch, gums), chemical seasonings (e.g., glutamic acid, sodium glutamate, glycine, sodium inosinate, sodium guanylate), flavors, miso, curry powder and plant-derived ingredients.

The plant-derived ingredient is not particularly limited, as long as the ingredient is derived from plants commonly used as ingredients. Examples of the ingredient include vegetables (e.g., radish, onion, green onion, carrot, burdock, lotus root, ginger, garlic, cabbage, green bell pepper, tomato, corn, and bamboo shoot); spicy vegetables (e.g., shiso, parsley, celery, leek, Japanese hornwort); mushrooms (e.g., shiitake mushroom, mushroom, enokitake mushroom, shimeji mushroom); fruits (e.g., apple, pear, kiwi fruit, pineapple, plum); seeds (e.g., sesame, nuts, chestnuts); and seaweeds (e.g., hijiki, kelp, wakame seaweed). The plant-derived ingredient may be a plant processed food product such as tofu, fried tofu, konjak and soy proteins. Namely, the plant-derived ingredient may be subjected to processing treatment such as grating, pasting, grinding, shredding, cutting into dice, rectangle and other shape, baking, and stir-frying.

However, when the flavor imparting composition according to one embodiment of the present invention is applied to a plant food product, it is preferable that the composition contains no animal-derived ingredient such as meat, eggs, and dairy products.

The other components may be any one either individually or in combination of two or more of those listed above. The content of the other components may be appropriately set as long as the objective of the present invention can be achieved.

The form of the flavor imparting composition according to one embodiment of the present invention is not particularly limited. For example, the composition may be preferably a liquid composition such as in liquid form, in suspension form, and in paste form because the liquid composition can mix well with the ingredient.

The flavor imparting composition according to one embodiment of the present invention may be a container-packed composition filled in a sealable gastight container or hermetic container, as with the heated seasoning composition according to one embodiment of the present invention.

The flavor imparting effect achieved by the flavor imparting composition according to one embodiment of the present invention may be the effect such that the plant food product using the composition has stronger richness, beef flavor or both, as compared with a plant food product (control) without using the composition under the same condition. The flavor imparting effect encompasses the effect of imparting beef flavor to the plant food product that normally has no such beef flavor as well as the effect of imparting richness to the plant food product such that the plant food product has richness not normally provided by the product, or such that the plant food product has better richness than that originally provided by the product.

The flavor imparting effect can be confirmed by the method described in Examples below. For example, the effect may be the effect to extent that the evaluation results in at least one, and preferably all of two selected from the group consisting of strongly feeling in terms of "richness" and strongly feeling in terms of "beef flavor" as compared with the control when the sensory evaluation for the evaluation items "richness" and "beef flavor" is conducted on sukiyaki warishita (sauce) using the flavor imparting composition according to one embodiment of the present invention. The stronger flavor imparting effect makes the plant food product used more palatable. From the viewpoint, examples of the flavor imparting effect include preferably the effect that results in the comprehensive evaluation of "++", "+", or "+/-", more preferably the comprehensive evaluation of "++", or "+", and even more preferably the comprehensive evaluation of "++", when the same sensory evaluation is conducted.

The food product for using the flavor imparting composition according to one embodiment of the present invention is not particularly limited, and may be either the plant food product or animal food product, preferably the plant food product because of strongly achieving the flavor imparting effect. While the plant food product is not particularly limited, examples of the product include plant bouillon, sukiyaki warishita (sauce), dressing, salad, soy sauce, sauce, ketchup, tare, tsuyu, ponzu, Chinese sauce, soup, noodles, mentsuyu, plant patties, plant milk, cooking sake and seasoning oil.

The amount used of the flavor imparting composition according to one embodiment of the present invention may be set appropriately depending on the content of the active ingredient in the flavor imparting composition, the type and amount of the ingredient used along with or of the processed food product produced using the flavor imparting composition, and is not particularly limited. Examples of the amount used include preferably 0.001 wt% to 50 wt%, more preferably 0.01 wt% to 10 wt%, and even more preferably 0.1 wt% to 5 wt%, relative to the plant food product.

While the method of producing the flavor imparting composition according to one embodiment of the present invention is not particularly limited, examples of the method include generally known methods of producing seasonings by mixing components, specifically a method including mixing the active ingredient with the other components such as water, alcohols and seasonining components by subjecting them with mixing means such as agitation at room temperature or under heating. The other components may be pretreated by in advance subjecting them to treatment such as shredding, pulverizing, swelling and heating.

The flavor imparting composition according to one embodiment of the present invention is preferably a heated composition. The flavor imparting composition according to one embodiment of the present invention is preferably subjected to antiseptic treatment such as sterilization treatment with heating and filtration in view of the preservability. The flavor imparting composition according to one embodiment of the present invention is preferably a composition subjected to sterilization treatment under the condition generally adopted in sterilizing food products such as seasonings, for example, preferably a composition sterilized by heating at 100°C or less for a few seconds to a few minutes. The flavor imparting composition according to one embodiment of the present invention may be subjected to retort sterilization. The retort sterilization may be carried out under the condition of a temperature, a pressure and a time to achieve the sterilization for long-term preservation and is not particularly limited. For example, the retort sterilization may be carried out under normal pressure or under pressure, at 100°C to 130°C, preferably about 120°C, for 1 minute to 30 minutes, preferably about 10 minutes.

A non-limiting specific embodiment of the present invention is a flavor imparting composition containing the following component (A), and is used at the amount of 1 wt%.
Component (A) 1 ppm or more to less than 1,000 ppm of methyl 5-hexenoate (0.01 ppm or more to less than 10 ppm relative to the plant food product)

A non-limiting specific embodiment of the present invention is a flavor imparting composition containing the following components (A) and (B), and is used at the amount of 1 wt%.
Component (A) 0.1 ppm or more to less than 1,000 ppm of methyl 5-hexenoate (0.001 ppm or more to less than 10 ppm relative to the plant food product)
Component (B) 1 ppm or more to less than 1,000 ppm of 2-vinylpyrazine (0.01 ppm or more to less than 10 ppm relative to the plant food product)

A non-limiting specific embodiment of the present invention is a flavor imparting composition containing the following components (A) and (B), and is used at the amount of 1 wt%.
Component (A) 0.1 ppm to 500 ppm of methyl 5-hexenoate (0.001 ppm to 5 ppm relative to the plant food product)
Component (B) 0.1 ppm to 500 ppm of 2-vinylpyrazine (0.001 ppm to 5 ppm relative to the plant food product)

A non-limiting specific embodiment of the present invention is a flavor imparting composition containing the following components (A) and (B), and is used at the amount of 1 wt%.
Component (A) 1 ppm to 500 ppm of methyl 5-hexenoate (0.01 ppm to 5 ppm relative to the plant food product)
Component (B) 1 ppm to 500 ppm of 2-vinylpyrazine (0.01 ppm to 5 ppm relative to the plant food product)

A non-limiting specific embodiment of the present invention is a flavor imparting composition containing the following components (A) and (B), and is used at the amount of 1 wt%.
Component (A) 10 ppm to 300 ppm of methyl 5-hexenoate (0.1 ppm to 3 ppm relative to the plant food product)
Component (B) 10 ppm to 300 ppm of 2-vinylpyrazine (0.1 ppm to 3 ppm relative to the plant food product)

A non-limiting specific embodiment of the present invention is a flavor imparting composition containing the following components (A) and (B), and is used at the amount of 1 wt%.
Component (A) 1 ppm to 500 ppm of methyl 5-hexenoate (0.01 ppm to 5 ppm relative to the plant food product)
Component (B) 0.1 ppm to 500 ppm of 2-vinylpyrazine (0.001 ppm to 5 ppm relative to the plant food product)

Cooking at room temperature or by heating using the flavor imparting composition according to one embodiment of the present invention and a plant-derived ingredient may produce a highly palatable plant food product with improved flavor including richness and beef flavor. The flavor imparting composition according to one embodiment of the present invention may be used as a seasoning.

The method for cooking a plant food product by using as a seasoning the flavor imparting composition according to one embodiment of the present invention is not particularly limited, and may be set appropriately according to the type and the amount of the plant-derived ingredient used and the type of the plant food product obtained, and the other. Examples of the cooking method include normal heating cooking methods such as stir-frying, frying, baking, steaming, heating with microwave oven, heating with hot air and heating in hot water.

### [Another aspect of the present invention]

The use of the active ingredient can impart richness, beef flavor or both to the plant food product. Therefore, another aspect of the present invention is a method for imparting flavor to a plant food product, including cooking by using methyl 5-hexenoate or methyl 5-hexenoate and 2-vinylpyrazine, and a plant-derived ingredient.

The present invention will now be described in further detail with reference to the following Examples. The technical scope of the present invention is not limited to these Examples, and the present invention may take various other forms to the extent that its objectives are achieved.

### Example 1

### Example 1 Evaluation of effect of seasoning composition on plant food product

### [1-1. Preparation of seasoning composition]

The mixture obtained by mixing the raw materials listed in Tables 1 to 2 with an agitator was subjected to heating treatment at 90°C for 4 hours using a water bath to obtain the seasoning compositions of Example 1 and Comparative Examples 1 to 3. The product "Fermented Umami Seasoning Liquid" (Brix 40.4%, salt 16.0 wt%, unsalted soluble solid 24.4%; Kikkoman Foods) was used as wheat gluten hydrolysate. The product "New Fructo 55" (Brix 73.7%; Showa Sangyo) was used as high fructose corn syrup. The product "Onion Extract" (Brix 10.0%, extract content 8.7 w/v%; Tokai Bussan) was used as onion extract. The product "Genuine Sesame Oil" (Kadoya Sesame Mills) was used as sesame oil. The product "Sodium Carbonate" (manufactured by Takasugi Pharmaceutical) was used as sodium carbonate. Tap water was used as water. The unit for each component in Tables 1 to 2 is gram (g).

In 300 ml of boiling water, 4 g of "Maggi Bouillon Addictive-Free Without Using 28 Items Such As Allergy Specific Raw Materials" (Japan Nestle), containing no animal raw material, was dissolved to obtain a plant bouillon.

The seasoning compositions of Example 1 and Comparative Examples 1 to 3 were added to the plant bouillon so as to become the amount of 0.2 wt% (0.6 g) to obtain bouillons of Example 1 and Comparative Examples 1 to 3 as test bouillons.

The plant bouillon to which the above composition was not added was referred to as bouillon of Reference Example 1 while the plant bouillons containing 1 wt% (3 g) and 2 wt% (6 g) of the product "Beef Extract N" (Tsukasa Food Industries) were referred to as bouillons of Reference Examples 2 and 3, respectively.

### [1-2. Physical and chemical analysis method]

The pH and Brix values before and after heating, and the chromaticity after heating were determined for the seasoning compositions of Example 1 and Comparative Examples 1 to 3.

The pH value was measured using the glass electrode compact pH meter "LAQUAtwin-pH-33B" (Horiba Advanced Techno). The Brix value (%) was measured using the pocket sugar meter "PAL-J" (Atago) in sucrose equivalent. The chromaticity was determined using the spectrocolorimeter "CM-5" (Konica Minolta) based on the Japanese Agricultural Standard (JAS) of soy sauce as the value multiplying the L* value of the CIEL*a*b* method by 0.6.

### [1-3. Sensory evaluation method]

The sensory evaluation was conducted by five panelists having the discrimination ability with respect to the taste of food products according to the six-point scoring system (0 being the weakest and 5 being the strongest) with respect to the strength of "richness" and "beef flavor" on the taste felt with the tongue when the test bouillon left at room temperature was scooped, eaten and held in the mouth. The average value (mean) and the standard deviation (mean ± standard deviation) were calculated from the resulting scores of the panelists. Note that to conduct the sensory evaluation, the panelists (with a training period: 3 to 15 years) were trained to discuss and evaluate the bouillon flavor. Specifically, the flavor and aroma characteristics of bouillon were discussed and aligned among the panelists to ensure that each panelist had a common understanding of the flavor and aroma characteristics. In order to ensure the validity of the sensory evaluation, each panelist was trained to evaluate several test bouillons, and the reproducibility of the evaluation by each panelist was then checked. After the checking, each panelist evaluated bouillon flavor of each test bouillon.

The term "richness" refers to a persistent and broad taste perceived on the tongue, and may also be expressed as thickness of taste. The term "beef flavor" refers to a distinctive meaty aroma of beef as perceived with beef extract.

In the sensory evaluation, using the bouillon of Reference Examples 1 to 3 as the indexes, the bouillon of Reference Example 1 was scored as 0, the bouillon of Reference Example 2 was scored as 3, and as the bouillon of Reference Example 3 was scored as 5, for both "richness" and "beef flavor". Based on the indexes, the panelists scored the test bouillon according to the following criteria:
0: No difference from bouillon of Reference Example 1
1: Slightly stronger feeling than bouillon of Reference Example 1
2: Stronger feeling than bouillon of Reference Example 1, but weaker feeling than bouillon of Reference Example 2
3: Feeling equal to bouillon of Reference Example 2
4: Stronger feeling than bouillon of Reference Example 2, but weaker feeling than bouillon of Reference Example 3
5: Feeling equal to or more than bouillon of Reference Example 3

As the comprehensive evaluation, the test bouillon with an average score of 3.0 or more for "richness" and an average score of 2.5 or more for "beef flavor" was evaluated as a bouillon with an excellent palatability and rated as "++", the test bouillon with an average score of 2.5 or more for "richness" and an average score of 2.0 or more for "beef flavor" was evaluated as a bouillon with a high palatability and rated as "+", and the test bouillon with an average score less than 2.5 for "richness" or an average score less than 2.0 for "beef flavor" was evaluated as a bouillon with a poor palatability and rated as "x".

### [1-4. Result of sensory evaluation]

Tables 1 and 2 show the physical and chemical analysis results of the seasoning compositions of Example 1 and Comparative Examples 1 to 3, and the sensory evaluation results of the bouillons of Example 1 and Comparative Examples 1 to 3 produced using the above compositions, respectively.

As shown in Tables 1 and 2, it was found that the seasoning composition of Example 1 containing the plant protein degradation product, the saccharide, the vegetable extract and the plant oil could impart richness and beef flavor to the plant food product and improve the palatability of the plant food product, regardless of containing no beef extract.

### Example 2 Evaluation of variety of raw material

In the similar manner as with Example 1, as shown in Table 1, the seasoning compositions and bouillons of Examples 2 to 13 were prepared. In the similar manner as with Example 1, the physical and chemical analysis was conducted for the seasoning compositions of Examples 2 to 13, and the sensory evaluation was conducted for the bouillons of Examples 2 to 13. The product "Concentrated Taste Liquid" (Brix 47.8%, salt 16.7 wt%, unsalted soluble solid 29.1%; Ajinomoto) was used as soy protein hydrolysate. The product "Amycin C" (Brix 37.7%, salt 16.5 wt%, unsalted soluble solid 21.2%; Shin-Shin Foods) was used as corn protein hydrolysate. The product "KG-25-70" (Brix 75.8%; Showa Sangyo) was used as liquid glucose. The product "Pure Fructose" (Kato Chemical) was used as fructose. The product "Rose Mark Granulated Sugar" (Dainippon Meiji Sugar) was used as sucrose. The product "Quebec Maple Syrup" (Brix about 66%; Queen Bee Garden) was used as maple syrup. The product "Grated Garlic KN0" (Brix 26.7%; Asano) was used as grated garlic. The product "Cabbage Extract" (Brix 9.6%, extract content 8.4 w/v%; Tokai Bussan) was used as cabbage extract. The product "Chinese Cabbage Extract" (Brix 8.7%, extract content 8.2 w/v%; Tokai Bussan) was used as Chinese cabbage extract. The product "Rapeseed Salad Oil" (Boso Oil and Fat) was used as rapeseed oil. The product "Nissin Soybean Refined Rapeseed Oil" (Nissin Oillio Group) was used as soybean oil. The product "Healthy Rice Oil" (J-Oil Mills) was used as rice oil.

Table 1 shows the physical and chemical analysis results and the sensory evaluation results of the seasoning compositions and bouillons of Examples 2 to 13. As shown in Table 1, it was found that even if various raw materials were employed for the plant protein degradation product, the saccharide, the vegetable extract and the plant oil, by containing a combination of the components, the resulting seasoning compositions could impart richness and beef flavor to the plant food product and improve the palatability of the plant food product.

### Example 3 Evaluation of ratio of component

In the similar manner as with Example 1, as shown in Tables 1 and 2, the seasoning compositions and bouillons of Examples 14 to 21 as well as the seasoning compositions and bouillons of Comparative Examples 4 to 5 were prepared. In the similar manner as with Example 1, the physical and chemical analysis was conducted for the seasoning compositions of Examples 14 to 21 and Comparative Examples 4 to 5, and the sensory evaluation was conducted for the bouillons of Examples 14 to 21 and Comparative Examples 4 to 5.

Tables 1 and 2 show the physical and chemical analysis results and the sensory evaluation results of the seasoning compositions and bouillons of Examples 14 to 21 and Comparative Examples 4 to 5. As shown in Tables 1 to 2, it was found that when the ratio of (A) plant protein degradation product to (C) vegetable extract ((A)/(C)) was at least 2 to 20, and when the ratio of (A) plant protein degradation product to (D) plant oil ((A)/(D)) was at least 50 to 1,000, the seasoning compositions containing the plant protein degradation product, the saccharide, the vegetable extract and the plant oil could impart richness and beef flavor to the plant food product and improve the palatability of the plant food product.

### Example 4 Evaluation of effect of pH of seasoning composition

In the similar manner as with Example 1, as shown in Table 2, the seasoning compositions and bouillons of Examples 22 to 26 as well as the seasoning composition and bouillon of Comparative Example 6 were prepared. In the similar manner as with Example 1, the physical and chemical analysis was conducted for the seasoning compositions of Examples 22 to 26 and Comparative Example 6, and the sensory evaluation was conducted for the bouillons of Examples 22 to 26 and Comparative Example 6.

Table 2 shows the physical and chemical analysis results and the sensory evaluation results for the seasoning compositions and bouillons of Examples 22 to 26 and Comparative Example 6. As shown in Table 2, it was found that when the seasoning composition containing the plant protein degradation product, the saccharide, the vegetable extract and the plant oil has a pH value of 4.50 or more, the seasoning composition could impart richness and beef flavor to the plant food product and improve the palatability of the plant food product.

### Example 5 Evaluation of effect of heating treatment condition

In the similar manner as with Example 1, as shown in Table 2, the seasoning compositions and bouillons of Examples 27 to 28 as well as the seasoning composition and bouillon of Comparative Example 7 were prepared. In the similar manner as with Example 1, the physical and chemical analysis was conducted for the seasoning compositions of Examples 27 to 28 and Comparative Example 7, and the sensory evaluation was conducted for the bouillons of Examples 27 to 28 and Comparative Example 7.

Table 2 shows the physical and chemical analysis results and the sensory evaluation results for the seasoning compositions and bouillons of Examples 27 to 28 and Comparative Example 7. As shown in Table 2, it was found that when the heating time was 2 hours or more, the seasoning composition containing the plant protein degradation product, the saccharide, the vegetable extract and the plant oil could impart richness and beef flavor to the plant food product and improve the palatability of the plant food product. In contrast, as shown by the result of Comparative Example 7, the composition prepared with no heating could not impart richness or beef flavor to the plant food product. Taking into consideration the results of Examples 6 and 7 shown in Table 1, at least when the heating time was 2 hours to 24 hours, the resulting seasoning composition could impart richness and beef flavor to the plant food product and improve the palatability of the plant food product.

Methyl 5-hexenoate and 2-vinylpyrazine were identified by gas chromatography-mass spectrometry (GC/MS analysis) as a result of determining components that increased or decreased depending on the heating treatment condition. The GC/MS analysis was carried out according to the following conditions.

In a 20 ml volume glass vial, 2 g of measurement sample was weighed, and 1 g of NaCI and 100 µL of 2-octanone solution prepared at a concentration of 1 ppm, which was an internal standard material, were added to the sample to prepare an analysis sample. The headspace-solid phase microextraction (HS-SPME) method was employed for extraction of aroma components, and components in a gas phase were adsorbed onto an SPME fiber. The aroma components were extracted and collected with the autosampler "AOC5000" (Shimadzu Corporation), and the GC/MS analysis was carried out by the GC-MS "GCMS QP-2010 Ultra" (Shimadzu Corporation). For calculating the content concentration, the standard solutions of methyl 5-hexenoate (Tokyo Chemical Industry) and 2-vinylpyrazine (Tokyo Chemical Industry) were prepared within the concentration range of 0.1 ppb to 1,000 ppb as samples for preparing each calibration curve, and were analyzed in the same manner. The collection and extraction of aroma components and the GC/MS analysis were carried out according to the following condition.

### [Collection and extraction of aroma component]

SPME fiber: Divinylbenzen/Carboxen/Polydimethylsiloxane (DVB/CAR/PDMS) (75 mm, 23 Ga)
Equilibration temperature: 40°C
Equilibration time: 5 minutes
Adsorption temperature: 40°C
Adsorption time: 20 minutes

### [GC/MS]

Inlet temperature: 240°C
Desorption time: 20 minutes
Injection mode: splitless
Carrier gas: He
Linear velocity: 40 cm/sec
Analysis column: DB-WAX UI 60 m x 0.25 mm x 0.25 µm (Agilent Technologies)
Oven temperature: 40°C (3 minutes) -> 5 °C/min -> 110°C -> 10 °C/min -> 240°C (5 minutes)
Transfer line temperature: 240°C
Ion source temperature: 240°C
Ionization method: El
Measurement mode: Scan
Mass range: 30 m/z to 250 m/z

From the results of the GC/MS analysis above, the internal standard area ratios of methyl 5-hexenoate and 2-vinylpyrazine were calculated based on the peak area values of methyl 5-hexenoate (EIC: 74 m/z), 2-vinylpyrazine (106 m/z) and the internal standard material 2-octanone (EIC: 58 m/z), respectively. The content in the sample was determined from the analysis results of each standard solution according to the absolute calibration curve method.

Table 3 shows the measurement results of methyl 5-hexenoate and 2-vinylpyrazine for the seasoning compositions of Example 1, Examples 27 to 28 and Comparative Example 7. As shown in Table 3, it was found that the contents of methyl 5-hexenoate and 2-vinylpyrazine in the seasoning compositions of Example 1 and Examples 27 to 28 increased by the heating treatment. From the results, it was found that the heating treatment condition could be such a condition that the level of methyl 5-hexenoate and/or 2-vinylpyrazine increased, which was a possible indicator. In particular, it was suggested that the heating treatment condition might be preferably such a condition that the content of methyl 5-hexenoate became 0.5 ppb or more and/or the content of 2-vinylpyrazine became 50 ppb or more. In addition, in the plant bouillon employed, the contents of methyl 5-hexenoate and 2-vinylpyrazine were less than the lower detection limit, respectively.

**[Table 1]**

| Type | Product | Reference Example 1 | Reference Example 2 | Reference Example 3 | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|---|---|
| (A) Plant protein degradation product | Wheat gluten hydrolysate | - | - | - | 100.0 | - | - | 100.0 | 100.0 | 100.0 | 100.0 | 100.0 | 100.0 | 100.0 | 100.0 | 100.0 | 100.0 | 100.0 |
| (A) Plant protein degradation product | Soy protein hydrolysate | - | - | - | - | 100.0 | - | - | - | - | - | - | - | - | - | - | - | - |
| (A) Plant protein degradation product | Com protein hydrolysate | - | - | - | - | - | 100.0 | - | - | - | - | - | - | - | - | - | - | - |
| (B) Saccharide | High fructose corn syrup | - | - | - | 50.0 | 50.0 | 50.0 | - | - | - | - | 50.0 | 50.0 | 50.0 | 50.0 | 50.0 | 50.0 | 50.0 |
| (B) Saccharide | Liquid glucose | - | - | - | - | - | - | 50.0 | - | - | - | - | - | - | - | - | - | - |
| (B) Saccharide | Fructose | - | - | - | - | - | - | - | 37.5 | - | - | - | - | - | - | - | - | - |
| (B) Saccharide | Sucrose | - | - | - | - | - | -- | - | - | 37.5 | - | - | - | - | - | - | - | - |
| (B) Saccharide | Maple syrup | - | - | - | - | - | - | - | - | - | 50.0 | - | - | - | - | - | - | - |
| (C) Vegetable extract | Onion extract | - | - | - | 25.0 | 25.0 | 25.0 | 25.0 | 25.0 | 25.0 | 25.0 | - | - | - | 25.0 | 25.0 | 25.0 | 5.0 |
| (C) Vegetable extract | Grated garlic | - | - | - | - | - | - | - | - | - | - | 25.0 | - | - | - | - | - | - |
| (C) Vegetable extract | Cabbage extract | - | - | - | - | - | - | - | - | - | - | - | 25.0 | - | - | - | - | - |
| (C) Vegetable extract | Chinese cabbage extract | - | - | - | - | - | - | - | - | - | - | - | - | 25.0 | - | - | - | - |
| (D) Plant oil | Sesame oil | - | - | - | 0.5 | 0.5 | 0.5 | 0.5 | 0.5 | 0.5 | 0.5 | 0.5 | 0.5 | 0.5 | - | - | | 0.5 |
| (D) Plant oil | Rapeseed oil | - | - | - | - | - | - | - | - | - | - | - | - | - | 0.5 | - | - | - |
| (D) Plant oil | Soybean oil | - | - | - | - | - | - | - | - | - | - | - | - | - | - | 0.5 | - | - |
| (D) Plant oil | Rice oil | - | - | - | - | - | - | - | - | - | - | - | - | - | - | - | 0.5 | - |
| pH adjusting agent | Sodium carbonate | - | - | - | 1.0 | 1.0 | 1.0 | 1.0 | 1.0 | 1.0 | 1.0 | 1.0 | 1.0 | 1.0 | 1.0 | 1.0 | 1.0 | 1.0 |
| Water | Water | - | - | - | 0.0 | 0.0 | 0.0 | 0.0 | 12.5 | 12.5 | 0.0 | 0.0 | 0.0 | 0.0 | 0.0 | 0.0 | 0.0 | 45.0 |
| Beef extract | Beef extract | 0% | 1% | 2% | - | - | - | - | - | - | - | - | - | - | - | - | - | - |
| Total amount | | - | - | - | 176.5 | 176.5 | 176.5 | 176.5 | 176.5 | 176.5 | 176.5 | 176.5 | 176.5 | 176.5 | 176.5 | 176.5 | 176.5 | 201.5 |
| Heating condition | Heating time (hr) | - | - | - | 4 | 4 | 4 | 4 | 4 | 24 | 24 | 4 | 4 | 4 | 4 | 4 | 4 | 4 |
| Physical and chemical analysis | pH value before heating | - | - | - | 6.41 | 5.56 | 6.44 | 6.45 | 6.79 | 6.70 | 6.64 | 6.24 | 6.34 | 6.48 | 6.36 | 6.54 | 6.54 | 6.50 |
| | pH value after heating | - | - | - | 4.78 | 4.94 | 4.91 | 5.10 | 4.89 | 5.29 | 5.14 | 4.58 | 4.79 | 4.74 | 4.76 | 50.0 | 4.91 | 5.17 |
| | Brix value before heating | - | - | - | 46.4 | - | - | - | - | - | - | - | - | - | - | - | - | - |
| | Brix value after heating | - | - | - | 46.4 | - | - | - | - | - | - | - | - | - | - | - | - | - |
| | Chromaticity after heating (10-fold dilution) | - | - | - | 36.55 | - | - | - | - | - | - | - | - | - | - | - | - | - |
| Sensory evaluation | Richness | 0 | 3 | 5 | 4.1±0.7 | 3.3±1.3 | 3.0±1.2 | 3.2±0.8 | 3.5±1.0 | 3.0±1.4 | 3.1±1.1 | 4,1±0.4 | 3.5±0.5 | 3.6±0.4 | 3.1±0.7 | 3.5±0.5 | 3.1±0.7 | 2.6+0.9 |
| | Beef flavor | 0 | 3 | 5 | 3.8±0.8 | 3.0±1.3 | 2.7±1.2 | 3.3±0.4 | 3.4±1.0 | 2.9±1.0 | 3.0±1.1 | 3.0+0.8 | 2.8±0.9 | 2.7±1.0 | 2.8±1.3 | 2.6±1.1 | 2.6±1.1 | 2.2±0.8 |
| | Comprehensive evaluation | | | | ++ | ++ | ++ | ++ | ++ | ++ | ++ | ++ | ++ | ++ | ++ | ++ | ++ | + |

**[Table 2]**

| Type | Product | Example 15 | Example 16 | Example | Example 18 | Example 19 | Example 20 | Example 21 | Examole 22 | Example 23 | Example 24 | Example 25 | Example 26 | Example 27 | Example 28 | Comparative Example 1 | Comparative 2 Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|---|---|---|---|---|
| (A) Plant protein degradation product | Wheat gluten hydrolysate | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| (A) Plant protein degradation product | Soy protein hydrolysate | - | - | - | - | - | - | - | - | - | - | - | - | - | - | - | - | - | - | - | - | - |
| (A) Plant protein degradation product | Corn protein hydrolysate | - | - | - | - | - | - | - | - | - | - | - | - | - | - | - | - | - | - | - | - | - |
| (B) Sacchande | High fructose com syrup | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 |
| (B) Sacchande | Liquid glucose | - | - | - | - | - | - | - | - | - | - | - | - | - | - | - | - | - | - | - | - | - |
| (B) Sacchande | Fructose | - | - | - | - | - | - | - | - | - | - | - | - | - | - | - | - | - | - | - | - | - |
| (B) Sacchande | Sucrose | - | - | - | - | - | - | - | - | - | - | - | - | - | - | - | - | - | - | - | - | - |
| (B) Sacchande | Maple syrup | - | - | - | - | - | - | - | - | - | - | - | - | - | - | - | - | - | - | - | - | - |
| (c) vegetable extract | Onion extract | 12.5 | 25.0 | 50.0 | 25.0 | 25.0 | 25.0 | 25.0 | 25.0 | 25.0 | 25.0 | 25.0 | 25.0 | 25.0 | 25.0 | 0.0 | 25.0 | 25.0 | 0.0 | 25.0 | 25.0 | 25.0 |
| (c) vegetable extract | Grated garlic | - | - | - | - | - | - | - | - | - | - | - | - | - | - | - | - | - | - | - | - | - |
| (c) vegetable extract | Cabbage extract | - | - | - | - | - | - | - | - | - | - | - | - | - | - | - | - | - | - | - | - | - |
| (c) vegetable extract | Chinese cabbage extract | - | - | - | - | - | - | - | - | - | - | - | - | - | - | - | - | - | - | - | - | - |
| (D) Plant oil | Sesame oil | 0.5 | 0.5 | 0.5 | 0.1 | 0.25 | 0.5 | 1.0 | 0.5 | 0.5 | 0.5 | 0.5 | 0.5 | 0.5 | 0.5 | 0.5 | 0.0 | 0.5 | 0.5 | 0.0 | 0.5 | 0.5 |
| (D) Plant oil | Rapeseed oil | - | - | - | - | - | - | - | - | - | - | - | - | - | - | - | - | - | - | - | - | - |
| (D) Plant oil | Soybean oil | - | - | - | - | - | - | - | - | - | - | - | - | - | - | - | - | - | - | - | - | - |
| (D) Plant oil | Rice oil | - | - | - | - | - | - | - | - | - | - | - | - | - | - | - | - | - | - | - | - | - |
| pH adjusting agent | Sodium carbonate | 1.0 | 1.0 | 1.0 | 1.0 | 1.0 | 1.0 | 1.0 | 0.1 | 0. 5 | 1.0 | 2.0 | 4.0 | 1.0 | 1.0 | 1.0 | 1.0 | 0.0 | 1.0 | 1.0 | 0.0 | 1 0 |
| Water | Water | 37.5 | 25.0 | 0.0 | 0.9 | 0.75 | 0.5 | 0.0 | 3.9 | 3.5 | 3.0 | 2.0 | 0.0 | 0.0 | 0.0 | 25.0 | 0.5 | 1.0 | 50.0 | 1.0 | 4.0 | 0.0 |
| Beef extract | Beef extract | - | - | - | - | - | - | - | - | - | - | - | - | - | - | - | - | - | - | - | - | - |
| Total amount | | 201.5 | 201.5 | 201.5 | 177.0 | 177.0 | 177.0 | 177.0 | 179.5 | 179.5 | 179.5 | 179.5 | 179.5 | 176.5 | 176.5 | 176.5 | 176.5 | **176.5** | 201.5 | 177.0 | 179.5 | 176.5 |
| Heating condition | Heating time (hr) | 4 | 4 | 4 | 4 | 4 | 4 | 4 | 4 | 4 | 4 | 4 | 4 | 2 | 6 | 4 | 4 | 4 | 4 | 4 | 4 | 0 |
| Physical and chemical | pH value hefore heating | 6.51 | 6.40 | 6.36 | 6.40 | 6.46 | 6.39 | 6.33 | 5.07 | 6.05 | 6.37 | 6.88 | 7.32 | - | - | 6.45 | 6.36 | 4.95 | 6.48 | 6.41 | 4.91 | - |
| | pH value after heating | 5.15 | 5.01 | 5.08 | 4.80 | 4.79 | 4.86 | 4.85 | 4.50 | 4.70 | 4.89 | 5.32 | 6.07 | 5.35 | 4.57 | 4.76 | 4.69 | 4.27 | 5.10 | 4.86 | 4.42 | 6.45 |
| | Brix value before heating | - | - | - | - | - | - | - | 44.8 | 45.0 | 45.2 | 45.8 | 46.6 | - | - | 44.5 | 46.1 | 45.5 | - | - | 44.8 | - |
| | Brix value after heating | - | - | - | - | - | - | - | 44.5 | 44.7 | 45.5 | 45.3 | 46.2 | 46.0 | 45.9 | 44.8 | 46.3 | 45.4 | - | - | 44.5 | 46.1 |
| | Chromaticity after heating (10-fold dilution) | - | - | - | - | - | - | - | 41.11 | 38.51 | 36.74 | 33.11 | 29.49 | 42.41 | 33.11 | 36.67 | 37.55 | 41.95 | - | - | 42.71 | 55.06 |
| Sensory evaluation | Richness | 3.1±0.7 | 3.6± 1.0 | 3.7±0.6 | 2.9±0.5 | 3.1±0.5 | 3.5±0.6 | 3.8±0.9 | 2.7±1.0 | 3.1±1.1 | 3.7±1.2 | 3.1*0.9 | 3.4±0.7 | 2.6±0.8 | 3.8±0.5 | 2.0±0.7 | 2.3±0.4 | 2.2±0.8 | 1.5±1.1 | 2.3±0.6 | 2.2±0.8 | 1.5±0.9 |
| | Beef flavor | 2.7±0.9 | 3.0±1.0 | 3.2±1.2 | 2.5±0.7 | 2.8±0.9 | 3.1±1.0 | 3.5 ±1.2 | 2.4±1.1 | 3.0±1.2 | 3.6±1.1 | 3.4*0.6 | 2.9±0.9 | 2.0±1.5 | 3.8±0.8 | 1.8±0.8 | 1.7±0.7 | 1.7±1.7 | 1.5±0.5 | 1.8±0.9 | 1.7±1.7 | 0.9±0.9 |
| | Comprehensive evaluation | ++ | ++ | ++ | + | ++ | ++ | ++ | + | ++ | ++ | ++ | ++ | + | ++ | x | x | x | x | x | x | x |

**[Table 3]**

| Item | Unit | Comparative Example 7 | Example 27 | Example 1 | Example 28 |
|---|---|---|---|---|---|
| Heating Time | (hr) | 0 | 2 | 4 | 6 |
| pH | (-) | 6.45 | 5.35 | 4.78 | 4.57 |
| Methyl 5-hexenoate | (ppb) | 0.157 | 1.45 | 1.67 | 1.98 |
| 2-Vinylpyrazine | (ppb) | 32.1 | 177 | 144 | 112 |

### Example 6: Evaluation of palatability of plant food product

As one example of the plant food product, sukiyaki using soy protein instead of meat was cooked by using sukiyaki warishita using the seasoning composition of Example 1.

Test sukiyaki warishita was prepared by adding the seasoning composition of Example 1 to the product "Ningyocho Imahan Sukiyaki Warishita" (Kinoene Shoyu) containing no animal raw material to become the content of 0.5 wt% at the final concentration. In addition, as a control, reference sukiyaki warishita was prepared by adding beef extract to become the content of 2 wt% at the final concetration.

Into a pot, 100 g of soy protein ("Soy Meat"; Fuji Oil) blanched, 25 g of onion, 25 g of Japanese leek, 35 g of shiitake mushroom, 50 g of tofu and 60 g of Chinese cabbage were put, and test warishita or reference warishita was added to the pot, and sukiyaki was cooked by heating the pot.

When comparing the taste of the soy protein in the sukiyaki cooked by using the test warishita with that using the reference warishita, the sukiyaki cooked by using the test warishita containing the seasoning composition of Example 1 added to become the content of 0.5 wt% was good in richness and beef flavor as well as thickness of taste and comprehensive flavor, and was similar with the sukiyaki cooked by using the reference warishita with beef extract added.

As another example of the plant food product, Japanese sesame dressing was prepared by using the seasoning composition of Example 1.

The Japanese sesame dressing was prepared by mixing 32.5 g of granulated sugar, 15 g of ground sesame, 15 g of concentrated soy sauce, 15 g of sesame oil, 30 g of rapeseed salad oil and 7.5 g of vinegar.

Test dressing was prepared by adding the seasoning composition of Example 1 to the Japanese sesame dressing so as to become the content of 0.5 wt% at the final concentration. Reference dressing was also prepared by adding beef extract to the Japanese sesame dressing so as to become the content of 2 wt% at the final concetration.

When comparing the taste of the test dressing with that of the reference dressing, the test dressing was good in richness and beef flavor as well as thickness of taste and comprehensive flavor, and was similar with reference dressing.

### Example 2

### Example 1 Evaluation of effect on plant food product of flavor imparting composition

### [1-1. Preparation of flavor imparting composition]

Into a 10 ml volume measuring flask, 0.1 g of methyl 5-hexenoate with a purity more than 98.0% (Tokyo Chemical Industry) was added and 95% ethanol was added until reaching the marked line to prepare a methyl 5-hexenoate undiluted solution (1 g/100 ml). Subsequently, the methyl 5-hexenoate undiluted solution was diluted with water to prepare each methyl 5-hexenoate solution such that the methyl 5-hexenoate solution added to each test food product below had the integrated volume of 100 µl when the methyl 5-hexenoate solution was used alone or of 50 µl when used in combination with the following 2-vinylpyrazine solution, so that the content of methyl 5-hexenoate in each test food product could be the predetermined content.

Into a 10 ml volume measuring flask, 0.1 g of methyl 2-vinylpyrazine with a purity more than 97% (Sigma-Aldrich) was added and 95% ethanol was added until reaching the marked line to prepare a 2-vinylpyrazine undiluted solution (1 g/100 ml). Subsequently, the 2-vinylpyrazine undiluted solution was diluted with water to prepare each 2-vinylpyrazine solution such that the 2-vinylpyrazine solution added to each test food product below had the integrated volume of 100 µl when the 2-vinylpyrazine solution was used alone or of 50 µl when used in combination with the methyl 5-hexenoate solution, so that the content of 2-vinylpyrazine in each test food product could be the predetermined content.

As described in Table 4, the product "Ningyocho Imahan Sukiyaki Warishita" (Kinoene Shoyu) containing no animal raw material was diluted with water by two times to obtain a diluted sukiyaki warishita, and then into the diluted sukiyaki warishita, 0.1 ml of the methyl 5-hexenoate solution, 0.1 ml of the 2-vinylpyrazine solution, or 0.1 ml of a mixture of the methyl 5-hexenoate solution and 2-vinylpyrazine solution was added to prepare test food products 1 to 14.

The diluted sukiyaki warishita, which contains no methyl 5-hexenoate solution and no 2-vinylpyrazine solution, was referred to as reference food product 1 while the product "Beef Extract N" (Tsukasa Food Industries) was added to the diluted sukiyaki warishita at the final concentration of 1 wt% and 2 wt% to prepare reference food products 2 and 3, respectively.

### [1-2. Sensory evaluation method]

The sensory evaluation was conducted with respect to the taste of food products according to the six-point scoring system (0 being the weakest and 5 being the strongest) with respect to the strength of "richness" and "beef flavor" on the taste felt with the tongue when the test and reference food products left at room temperature was scooped, eaten and held in the mouth.

The term "richness" refers to a persistent and broad taste perceived on the tongue, and may also be expressed as thickness of taste. The term "beef flavor" refers to a distinctive meaty aroma of beef as perceived with beef extract.

In the sensory evaluation, using the reference food products 1 to 3 as the indexes, the reference food product 1 was scored as 0, the reference food product 2 was scored as 3, and as the reference food product 3 was scored as 5, for both "richness" and "beef flavor". Based on the indexes, the panelist scored the test food product according to the following criteria:
0: No difference from the reference food product 1
1: Slightly stronger feeling than the reference food product 1
2: Stronger feeling than the reference food product 1, but weaker feeling than the reference food product 2
3: Feeling equal to the reference food product 2
4: Stronger feeling than the reference food product 2, but weaker feeling than the reference food product 3
5: Feeling equal to or more than the reference food product 3

As the comprehensive evaluation, the test food product with a score of 4 or more for both "richness" and "beef flavor" was evaluated as a food product with an excellent palatability and rated as "++", the test product with a score between 3 and 4 for both "richness" and "beef flavor" was evaluated as a food product with a high palatability and rated as "+", the test food product with a score of 3 or more for either one of "richness" and "beef flavor" as well as with a score less than 3 for the other was evaluated as a food product with a good palatability and rated as "+/-", and the test food product with a score less than 3 for both "richness" and "beef flavor" was evaluated as a food product with a poor palatability and rated as "x". Regardless of the score for "richness" or "beef flavor," the test food product having unusual flavor not originally perceived with sukiyaki warishita was rated as "x".

### [1-3. Result of sensory evaluation]

Table 4 shows the sensory evaluation results of the test food products 1 to 14. As shown in Table 4, the test food products 1 to 4 having the content of methyl 5-hexenoate of 0.01 ppm to 10 ppm had stronger richness as compared with the reference food product 1 containing no methyl 5-hexenoate. However, when the content of methyl 5-hexenoate was 10 ppm, kerosene-like unusual flavor was felt even though the plant food product had improved flavor and could solve the problem of the present invention.

From the above results, it was found that methyl 5-hexenoate, in particular the content of methyl 5-hexenoate of 0.01 ppm or more to less than 10 ppm, had the effect of imparting richness to the plant food product thereby improving the flavor.

The test food products 5 to 8 having the content of 2-vinylpyrazine of 0.01 ppm to 10 ppm had slight richness and beef flavor as compared with the reference food product 1 containing no 2-vinylpyrazine. However, when the content of 2-vinylpyrazine was 10 ppm, unusual flavor like tingling sensation on the tongue was felt. From the results, it was found that 2-vinylpyrazine by itself had the weaker effect of imparting richness and beef flavor to the plant food product.

In contrast, the test food products 9 to 14 containing 2-vinylpyrazine in addition to methyl 5-hexenoate had stronger richness as compared with the reference food product 1 containing no methyl 5-hexenoate and no 2-vinylpyrazine. The test food products 10 to 14 had stronger beef flavor that was not at all or hardly felt with the test food products 1 to 7 containing only methyl 5-hexenoate or only 2-vinylpyrazine. The test food product 14 having the content of 2-vinylpyrazine of 10 ppm had unusual flavor like tingling sensation on the tongue while having improved flavor thereby solving the problem of the present invention.

The test food products 11 and 9, in which the contents of methyl 5-hexenoate and 2-vinylpyrazine were 0.001 ppm, respectively, and were very small, but they had not only richness but also beef flavor perceived because of containing both methyl 5-hexenoate and 2- vinylpyrazine.

From the above results, it was found that the combination of methyl 5-hexenoate and 2-vinylpyrazine, in particular the combination such that the content of methyl 5-hexenoate was 0.001 ppm or more to less than 10 ppm and the content of 2-vinylpyrazine was 0.01 ppm or more to less than 10 ppm, or the content of methyl 5-hexenoate was 0.01 ppm or more to less than 10 ppm and the content of 2-vinylpyrazine was 0.001 ppm or more to less than 10 ppm, had the effect of imparting richness and further beef flavor to the plant food product.

It was found that the single use of methyl 5-hexenoate or 2-vinylpyrazine could hardly impart beef flavor to the plant food product, so that the effect of imparting beef flavor to the plant food product achieved by the combination thereof was a synergistic effect but not an additive effect by each component.

**[Table 4]**

| Components | Unit | Reference food 1 | Reference food 2 | Reference food 3 | Test food 1 | Test food 2 | Test food 3 | Test food 4 | Test food 5 | Test food 6 | Test food 7 | Test food 8 |
|---|---|---|---|---|---|---|---|---|---|---|---|---|
| (A) Methyl 5-hexenoate | [ppm] | - | - | - | 0.01 | 0.1 | 1 | 10 | - | - | - | - |
| (B) 2-Vinylpyrazine | [ppm] | - | - | - | - | - | - | - | 0.01 | 0.1 | 1 | 10 |
| Beef extract | [wt%] | 0% | 1% | 2% | - | - | - | - | - | - | - | - |
| Total amount | [g] | 100 | 100 | 100 | 100 | 100 | 100 | 100 | 100 | 100 | 100 | 100 |
| | | | | | | | | | | | | |
| Sensory evaluation | Richness | 0 | 3 | 5 | 3 | 4 | 5 | 5 | 1 | 2 | 3 | 4 |
| | Beef flavor | 0 | 3 | 5 | 0 | 0 | 0 | 0 | 1 | 2 | 2 | 3 |
| | Unusual flavor | - | - | - | - | - | - | Kerosene -like | - | - | - | Tingling on tongue |
| | Comprehensive evaluation | | | | +/- | +/- | +/- | x | x | x | +/- | x |

| Components | Unit | Test food 9 | Test food 10 | Test food 11 | Test food 12 | Test food 13 | Test food 14 |
|---|---|---|---|---|---|---|---|
| (A) Methyl 5-hexenoate | [ppm] | 0.1 | 0.01 | 0.001 | 1 | 1 | 1 |
| (B) 2-Vinylpyrazine | [ppm] | 0.001 | 0.01 | 0.1 | 0.01 | 1 | 10 |
| Beef extract | [wt%] | | | | | | |
| Total amount | [ml] | 100 | 100 | 100 | 100 | 100 | 100 |
| | | | | | | | |
| Sensory evaluation | Richness | 4 | 3 | 3 | 5 | 5 | 5 |
| | Beef flavor | 2 | 3 | 4 | 4 | 5 | 5 |
| | Unusual flavor | - | - | - | - | - | Tingling on tongue |
| | Comprehensive evaluation | +/- | + | + | ++ | ++ | x |

### Example 2 Evaluation of flavor imparting effect on plant food product

As one example of the effect of imparting flavor to a plant food product achieved by the active ingredient, sukiyaki using soy protein instead of meat was cooked by using sukiyaki warishita using methyl 5-hexenoate and 2-vinylpyrazine.

The mixed solution of methyl 5-hexenoate and 2-vinylpyrazine prepared in Example 1 was added to the sukiyaki warishita containing no animal raw material, such that the content of each component was 1 ppm, to prepare test warishita. Beef extract was added to the sukiyaki warishita at a final concentration of 2wt% to prepare reference warishita as a control.

Into a pot, 100 g of soy protein ("Fujinic-PT-FLH"; Fuji Oil) blanched, 25 g of onion, 25 g of Japanese leek, 35 g of shiitake mushroom, 50 g of tofu and 60 g of Chinese cabbage were put, and the test warishita or reference warishita was added to the pot, and sukiyaki was cooked by heating the pot.

When comparing the taste of the soy protein in the sukiyaki cooked by using the test warishita with that using the reference warishita, the sukiyaki cooked by using the test warishita having the content of methyl 5-hexenoate of 1 ppm and the content of 2-vinylpyrazine of 1 ppm was good in richness and beef flavor as well as thickness of taste and comprehensive flavor, and was similar with the sukiyaki cooked by using the reference warishita with beef extract added.

As another example of the effect of imparting flavor to a plant food product caused by the active ingredient, Japanese sesame dressing was prepared by using methyl 5-hexenoate and 2-vinylpyrazine.

The Japanese sesame dressing was prepared by mixing 32.5 g of granulated sugar, 15 g of ground sesame, 15 g of concentrated soy sauce, 15 g of sesame oil, 30 g of rapeseed salad oil and 7.5 g of vinegar.

The mixed solution of methyl 5-hexenoate and 2-vinylpyrazine prepared in Example 1 was added to the Japanese sesame dressing to prepare test dressing in which the content of each component was 1 ppm. Beef extract was added to the Japanese sesame dressing to prepare reference dressing in which the content of beef extract was 2 wt%.

When comparing the taste of the test dressing with that of the reference dressing, the test dressing was good in richness and beef flavor as well as thickness of taste and comprehensive flavor, and was similar with that of the reference dressing.

### Industrial Applicability

The heated seasoning composition according to one embodiment of the present invention can impart favorable flavor to a plant food product. The plant food product according to one embodiment of the present invention can have favorable flavor. Thus, they can be produced on an industrial scale and used at a restaurant and home, thereby being useful as a seasoning or a food product used in various situations. The plant food product according to one embodiment of the present invention can be served for dishes of vegetarians and vegans.

The flavor imparting composition according to one embodiment of the present invention can impart favorable flavor to a plant food product, so that the composition can be produced on an industrial scale and used at a restaurant and home, thereby being useful as a seasoning used in various situations.

### Cross-Reference of Related Applications

The present application claims the benefit of priority to Japanese Patent Application No. 2023-053040 filed on March 29, 2023, Japanese Patent Application No. 2023-053041 filed on March 29, 2023, and Japanese Patent Application No. 2023-134356 filed on August 22, 2023, the disclosure of which are incorporated herein by reference in their entirety. In addition, the disclosure of all the documents described herein including Patent Documents 1 to 6 is incorporated herein by reference in its entirety.

## Claims

1. A heated seasoning composition, comprising a plant protein degradation product, saccharide, vegetable extract, and plant oil, wherein the heated seasoning composition has a pH value equal to or more than 4.50, the total amount of the plant protein degradation product, the saccharide and the vegetable extract is equal to or more than 60 wt% relative to the total amount of the heated seasoning composition, the heated seasoning composition comprises no yeast extract, and the vegetable extract is at least one selected from the group consisting of onion extract, garlic extract, cabbage extract, and Chinese cabbage extract.

2. The heated seasoning composition according to claim 1, wherein the heated seasoning composition is a container-packed heated seasoning composition.

3. The heated seasoning composition according to claim 1, wherein the heated seasoning composition comprises no animal-derived ingredient.

4. The heated seasoning composition according to any one of claims 1 to 3, wherein the plant protein degradation product is at least one selected from the group consisting of wheat gluten hydrolysate, soy protein hydrolysate, and corn protein hydrolysate.

5. The heated seasoning composition according to any one of claims 1 to 3, wherein the saccharide is at least one selected from the group consisting of fructose, glucose, and sucrose, and a sugar-containing product therewith.

6. The heated seasoning composition according to any one of claims 1 to 3, wherein the plant oil is at least one selected from the group consisting of sesame oil, rapeseed oil, soybean oil, and rice oil.

7. The heated seasoning composition according to any one of claims 1 to 3, further comprising a pH adjusting agent, wherein the pH adjusting agent is at least one selected from the group consisting of sodium carbonate, sodium hydrogen carbonate, potassium carbonate, and phosphate.

8. A plant food product, comprising as raw materials the heated seasoning composition according to any one of claims 1 to 3 and a plant-derived ingredient.

9. A method of producing a plant food product, comprising cooking by using the heated seasoning composition according to any one of claims 1 to 3 and a plant-derived ingredient to obtain a plant food product.

10. A heated composition for imparting beef flavor, comprising a plant protein degradation product, saccharide, vegetable extract, and plant oil, wherein the heated composition has a pH value equal to or more than 4.50, the total amount of the plant protein degradation product, the saccharide and the vegetable extract is equal to or more than 60 wt% relative to the total amount of the heated composition, the heated composition comprises no yeast extract, and the vegetable extract is at least one selected from the group consisting of onion extract, garlic extract, cabbage extract and Chinese cabbage extract.

11. A method for imparting flavor to a plant food product, comprising cooking by using a heated composition and a plant-derived ingredient, wherein the heated composition comprises a plant protein degradation product, saccharide, vegetable extract, and plant oil, the heated composition has a pH value equal to or more than 4.50, the total amount of the plant protein degradation product, the saccharide and the vegetable extract is equal to or more than 60 wt% relative to the total amount of the heated composition, the heated composition comprises no yeast extract, and the vegetable extract is at least one selected from the group consisting of onion extract, garlic extract, cabbage extract and Chinese cabbage extract.

12. A flavor imparting composition, comprising methyl 5-hexenoate.

13. A flavor imparting composition, comprising methyl 5-hexenoate and 2-vinylpyrazine.

14. The flavor imparting composition according to claim 12 or 13, wherein the composition is a container-packed falvor imparting composition.

15. The flavor imparting composition according to claim 12 or 13, wherein the composition is used as a seasoning.

16. The flavor imparting composition according to claim 12 or 13, wherein the composition is used for a plant food product.

17. The flavor imparting composition according to claim 12 or 13, wherein the content of methyl 5-hexenoate is an amount to become 0.001 ppm to 5 ppm in a plant food product used.

18. The flavor imparting composition according to claim 13, wherein the content of 2-vinylpyrazine is an amount to become 0.001 ppm to 5 ppm in a plant food product used.

19. The flavor imparting composition according to claim 13, wherein the content of methyl 5-hexenoate is an amount to become 0.001 ppm to 5 ppm in a plant food product used and the content of 2-vinylpyrazine is an amount to become 0.01 ppm to 5 ppm in a plant food product used; or the content of methyl 5-hexenoate is an amount to become 0.01 ppm to 5 ppm in a plant food product used and the content of 2-vinylpyrazine is an amount to become 0.001 ppm to 5 ppm in a plant food product used.

20. A method for imparting flavor to a plant food product, comprising cooking by using methyl 5-hexenoate or methyl 5-hexenoate and 2-vinylpyrazine, and a plant-derived ingredient.
